(19) **Europäisches Patentamt / European Patent Office / Office européen des brevets**

(11) **EP 4 757 423 A1**

(12) **EUROPEAN PATENT APPLICATION**
published in accordance with Art. 153(4) EPC

(43) Date of publication:
**10.06.2026 Bulletin 2026/24**

(21) Application number: **23947965.2**

(22) Date of filing: **08.08.2023**

(51) International Patent Classification (IPC):
**H04W 48/10** (2009.01)

(52) Cooperative Patent Classification (CPC):
**H04W 48/10**

(86) International application number:
**PCT/CN2023/111822**

(87) International publication number:
**WO 2025/030386 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **HUAWEI TECHNOLOGIES CO., LTD.**
**Shenzhen 518129 (CN)**

(72) Inventors:
- **WEI, Dongdong**
  **Shenzhen, Guangdong 518129 (CN)**
- **TANG, Hao**
  **Shenzhen, Guangdong 518129 (CN)**
- **ZHANG, Liqing**
  **Shenzhen, Guangdong 518129 (CN)**
- **ZHANG, Zhang**
  **Shenzhen, Guangdong 518129 (CN)**
- **MA, Jianglei**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **COMMUNICATION METHOD AND APPARATUS**

(57) This application provides a communication method and apparatus, and pertains to the field of communication technologies, to transmit system information in a future communication system. In this method, a transmitting end may select a proper obtaining manner of system information based on an actual situation, and use a synchronization signal to carry the obtaining manner, so that after receiving the synchronization signal, a receiving end can determine, based on the obtaining manner carried on the synchronization signal, a manner to be used to obtain the system information. For example, the receiving end passively receives the system information, or actively requests the system information. In this way, the synchronization signal can be reused to indicate the obtaining manner of the system information, and the obtaining manner does not need to be additionally configured. This can reduce overheads.

FIG. 6

EP 4 757 423 A1

## Description

**TECHNICAL FIELD**

This application relates to the communication field, and in particular, to a communication method and apparatus.

**BACKGROUND**

Currently, in a cell search and synchronization procedure, a terminal may obtain a master information block (master information block, MIB) by using a PBCH in a synchronization signal and physical broadcast channel (physical broadcast channel, PBCH) block (synchronization signal and PBCH block, SSB). The MIB defines most fundamental system information of a cell and a parameter required for decoding a system information block 1 (system information block, SIB1), such as a system frame number, a subcarrier spacing indication, a control resource set (control-resource set, CoreSet) 0 for receiving the SIB1, and a search space configuration. Further, the terminal may obtain the SIB1 based on the CoreSet0 and the search space configuration in the MIB.

However, in a future communication system, system information may be transmitted in a plurality of different manners. In other words, a manner in which the terminal obtains the system information may be different from the foregoing manner. How to specifically obtain the system information is a hot topic currently discussed.

**SUMMARY**

Embodiments of this application provide a communication method and apparatus, to provide a new obtaining manner of system information, to reduce overheads.

To achieve the foregoing objective, this application uses the following technical solutions.

According to a first aspect, a communication method is provided. The method includes: receiving a synchronization signal from a network apparatus, where the synchronization signal carries an obtaining manner of system information; and obtaining the system information based on the obtaining manner.

It can be learned from the method in the first aspect that in a future communication system, system information may be transmitted in a plurality of different manners, so that a receiving end (for example, a terminal apparatus) can obtain the system information in the plurality of different manners. A transmitting end (for example, the network apparatus) may select a proper obtaining manner of the system information based on an actual situation, and use the synchronization signal to carry the obtaining manner, so that after receiving the synchronization signal, the receiving end can determine, based on the obtaining manner carried on the synchronization signal, a manner to be used to obtain the system information. For example, the receiving end passively receives the system information, or actively requests the system information. In this way, the synchronization signal can be reused to indicate the obtaining manner of the system information, and the obtaining manner does not need to be additionally configured. This can reduce overheads.

In a possible design solution, the obtaining manner is any one of the following: directly receiving the system information from the network apparatus, or obtaining the system information by sending a first signal. In other words, the network apparatus may select a proper obtaining manner based on an actual situation (for example, a quantity of users). For example, when a network is busy (for example, there are a large quantity of users), the network apparatus may periodically send the system information, and in this case, the receiving end may directly receive the system information; or when the network is idle (for example, there are a small quantity of users), the network apparatus may send the system information after receiving the first signal sent by the receiving end, and in this case, the receiving end needs to send the first signal to obtain the system information. In this way, a proper obtaining manner of the system information can be selected based on an actual situation, to reduce energy consumption of the network apparatus.

In a possible design solution, the synchronization signal includes a primary synchronization signal PSS and a secondary synchronization signal SSS, and the obtaining manner is carried on the PSS, or the obtaining manner is carried on the SSS. That is, a synchronization signal can be flexibly selected based on an actual situation to carry the obtaining manner.

Optionally, the synchronization signal further carries at least one of the following: a cell identity of a cell of the network apparatus, a cell barred indicator, and time information. The cell barred indicator indicates whether a terminal is allowed to camp on the cell of the network apparatus. The time information indicates time for directly receiving the system information or time for sending the first signal. In other words, the receiving end may distinguish cells based on the cell identity carried on the synchronization signal, and may determine, based on the cell barred indicator, whether the receiving end can camp on the cell, that is, whether the receiving end needs to obtain the system information. For example, when the cell barred indicator indicates barred, the receiving end does not need to obtain the system information. The receiving end may determine, based on the time information, the time for obtaining the system information. For example, when the obtaining manner is directly receiving the system information from the network apparatus, the time information indicates

2

the time for directly receiving the system information. Alternatively, when the obtaining manner is obtaining the system information by sending the first signal, the time information indicates the time for sending the first signal. In this way, information carried on the synchronization signal can be flexibly set based on an actual situation, to avoid communication redundancy caused by a mismatch with the actual situation.

Further, the cell identity is carried on the SSS. It may be understood that the cell identity is used to identify each cell, and there are usually a large quantity of cell identities. For example, cell identities in NR include 1 to 1008. In other words, a large quantity of sequences are usually required to represent different cell identities. Because there are a large quantity of sequences, complexity of detection performed by the receiving end increases, and the receiving end performs downlink synchronization (coarse synchronization) based on the PSS. Therefore, carrying the cell identity on the SSS can avoid a case in which because the cell identity is carried on the PSS, high complexity of the PSS and high complexity of detecting the PSS by the receiving end are caused, and it is inconvenient for the receiving end to perform downlink synchronization (coarse synchronization) based on the PSS.

Further, the cell barred indicator and/or the time information is carried on the PSS. In other words, the PSS may carry the cell barred indicator, the time information, or the cell barred indicator and the time information.

Further, the cell barred indicator and/or the time information is carried on the SSS. In other words, the SSS may carry the cell barred indicator, the time information, or the cell barred indicator and the time information. It may be understood that, when at least one of the cell barred indicator and the time information is carried on the SSS, the PSS can carry less information. In this case, the PSS does not carry all of the obtaining manner, the cell barred indicator, and the time information. In this way, complexity of detecting the PSS by the receiving end can be reduced, so that the receiving end performs downlink synchronization based on the PSS.

Further, when the cell barred indicator is carried on the PSS, the time information is carried on the SSS; or when the time information is carried on the PSS, the cell barred indicator is carried on the SSS. In this way, the cell barred indicator and the time information can be separately carried on the PSS or the SSS, to avoid a case in which because both the cell barred indicator and the time information are carried on the PSS or the SSS, the PSS or the SSS carries too much information, resulting in high complexity of the PSS or the SSS.

Further, the SSS includes a first sequence and a second sequence, the first sequence is used to carry the cell identity, and the second sequence is used to carry at least one of the cell barred indicator, the time information, and the obtaining manner. That is, when the SSS carries a plurality of pieces of information, the second sequence is used to carry information other than the cell identity in the plurality of pieces of information. Different sequences are used to carry different information, and a multi-sequence feature may be used to indicate more information without increasing total resource overheads. This avoids an increase in resource overheads caused by indicating the information by using a longer single sequence.

Further, the second sequence is used to scramble the first sequence. In other words, a scrambling sequence (the second sequence) is used to carry some information, and no additional resource is introduced to indicate the information. This helps reduce indication resource overheads.

Further, the second sequence is a Hadamard sequence. Because the Hadamard sequence is easy to operate and has low complexity, it is easy to implement by a terminal.

Optionally, information carried on the PSS indicates that the synchronization signal includes the SSS. In other words, the network apparatus may set different periodicities to send the PSS and the SSS. For example, the network apparatus sends the PSS every 20 milliseconds (ms), and sends the SSS every 80 ms. That is, the network apparatus sends the SSS once after sending the PSS three times. In this way, the PSS can indicate whether the network apparatus needs to send the SSS, so that the receiving end successfully receives the SSS based on the information indicated by the PSS.

In a possible design solution, the system information includes at least one of the following: a system frame number of the cell of the network apparatus, a subcarrier spacing indication, an intra-frequency cell reselection indicator, a frequency domain offset between the synchronization signal and a common resource, cell selection information, cell access-related information, serving cell configuration information, scheduling information of other system information, a connection setup failure control configuration, and a terminal timer configuration.

According to a second aspect, a communication method is provided. The method includes: sending a synchronization signal carrying an obtaining manner of system information; and sending the system information.

In a possible design solution, the obtaining manner is any one of the following: directly receiving the system information from a network apparatus, or obtaining the system information by sending a first signal.

In a possible design solution, the synchronization signal includes a primary synchronization signal PSS and a secondary synchronization signal SSS, and the obtaining manner is carried on the PSS, or the obtaining manner is carried on the SSS.

Optionally, the synchronization signal further carries at least one of the following: a cell identity of a cell of the network apparatus, a cell barred indicator, and time information. The cell barred indicator indicates whether a terminal is allowed to camp on the cell of the network apparatus. The time information indicates time for directly receiving the system information or time for sending the first signal.

Further, the cell identity is carried on the SSS.

Further, the cell barred indicator and/or the time information is carried on the PSS.

Further, the cell barred indicator and/or the time information is carried on the SSS.

Further, when the cell barred indicator is carried on the PSS, the time information is carried on the SSS; or when the time information is carried on the PSS, the cell barred indicator is carried on the SSS.

Further, the SSS includes a first sequence and a second sequence, the first sequence is used to carry the cell identity, and the second sequence is used to carry at least one of the cell barred indicator, the time information, and the obtaining manner.

Further, the second sequence is used to scramble the first sequence.

Further, the second sequence is a Hadamard sequence.

Optionally, information carried on the PSS indicates that the synchronization signal includes the SSS.

In a possible design solution, the system information includes at least one of the following: a system frame number of the cell of the network apparatus, a subcarrier spacing indication, an intra-frequency cell reselection indicator, a frequency domain offset between the synchronization signal and a common resource, cell selection information, cell access-related information, serving cell configuration information, scheduling information of other system information, a connection setup failure control configuration, and a terminal timer configuration.

In a possible design solution, when a quantity of served users is greater than or equal to a quantity threshold, the obtaining manner is directly receiving the system information from the network apparatus; or when the quantity of served users is less than the quantity threshold, the obtaining manner is obtaining the system information by sending the first signal. In this way, an obtaining manner of the system information can be flexibly determined based on an actual situation.

In addition, for technical effects of the method in the second aspect, refer to the technical effects of the method in the first aspect. Details are not described herein again.

According to a third aspect, a communication method is provided. The method includes: receiving a synchronization signal from a network apparatus, where the synchronization signal carries a cell barred indicator; and determining, based on the cell barred indicator, whether to obtain system information. The cell barred indicator indicates whether a terminal is allowed to camp on a cell of the network apparatus.

Based on the method in the third aspect, it can be learned that, currently, the cell barred indicator is obtained by using a MIB. That is, a receiving end can obtain the cell barred indicator only after successfully demodulating a physical broadcast channel PBCH. That is, in this case, it can be determined whether the receiving end can access the cell. It can be learned that this manner causes large energy consumption of the receiving end. Therefore, the cell barred indicator is carried on the synchronization signal, so that the receiving end can obtain the cell barred indicator after detecting the synchronization signal. In other words, in this case, the receiving end does not need to receive the PBCH again or demodulate the PBCH to obtain the cell barred indicator. In this way, energy consumption of the receiving end can be reduced.

In a possible design solution, the synchronization signal includes a primary synchronization signal PSS and a secondary synchronization signal SSS, and the cell barred indicator is carried on the PSS, or the cell barred indicator is carried on the SSS. That is, a synchronization signal can be flexibly selected based on an actual situation to carry the cell barred indicator.

In a possible design solution, the synchronization signal further carries at least one of the following: a cell identity of the cell of the network apparatus, an obtaining manner of the system information, and time information. The obtaining manner is any one of the following: directly receiving the system information from the network apparatus, or obtaining the system information by sending a first signal. The time information indicates time for directly receiving the system information or time for sending the first signal. In other words, after receiving the synchronization signal, the receiving end may distinguish between cells based on the cell identity carried on the synchronization signal; may determine, based on the obtaining manner, a manner for obtaining the system information; and may determine, based on the time information, time for obtaining the system information. In this way, information carried on the synchronization signal can be flexibly set based on an actual situation, to avoid communication redundancy caused by a mismatch with the actual situation.

Optionally, the cell identity is carried on the SSS. It may be understood that the cell identity is used to identify each cell, and there are usually a large quantity of cell identities. For example, cell identities in NR include 1 to 1008. In other words, a large quantity of sequences are usually required to represent different cell identities. Because there are a large quantity of sequences, complexity of detection performed by the receiving end increases, and the receiving end performs downlink synchronization (coarse synchronization) based on the PSS. Therefore, carrying the cell identity on the SSS can avoid a case in which because the cell identity is carried on the PSS, high complexity of the PSS and high complexity of detecting the PSS by the receiving end are caused, and it is inconvenient for the receiving end to perform downlink synchronization (coarse synchronization) based on the PSS.

Further, the obtaining manner and/or the time information is carried on the PSS. In other words, the PSS may carry the obtaining manner, the time information, or the obtaining manner and the time information.

Further, the obtaining manner and/or the time information is carried on the SSS. In other words, the SSS may carry the obtaining manner, the time information, or the obtaining manner and the time information. It may be understood that, when at least one of the obtaining manner and the time information is carried on the SSS, the PSS can carry less information. In this case, the PSS does not carry all of the obtaining manner, the cell barred indicator, and the time information. In this way, complexity of detecting the PSS by the receiving end can be reduced, so that the receiving end performs downlink synchronization based on the PSS.

Further, when the obtaining manner is carried on the PSS, the time information is carried on the SSS; or when the time information is carried on the PSS, the obtaining manner is carried on the SSS. In this way, the obtaining manner and the time information can be separately carried on the PSS or the SSS, to avoid a case in which because both the obtaining manner and the time information are carried on the PSS or the SSS, the PSS or the SSS carries too much information, resulting in high complexity of the PSS or the SSS.

Further, the SSS includes a first sequence and a second sequence, the first sequence is used to carry the cell identity, and the second sequence is used to carry at least one of the obtaining manner, the time information, and the cell barred indicator. That is, when the SSS carries a plurality of pieces of information, the second sequence is used to carry information other than the cell identity in the plurality of pieces of information. Different sequences are used to carry different information, and a multi-sequence feature may be used to indicate more information without increasing total resource overheads. This avoids an increase in resource overheads caused by indicating the information by using a longer single sequence.

Further, the second sequence is used to scramble the first sequence. In other words, a scrambling sequence (the second sequence) is used to carry some information, and no additional resource is introduced to indicate the information. This helps reduce indication resource overheads.

Further, the second sequence is a Hadamard sequence. Because the Hadamard sequence is easy to operate and has low complexity, it is easy to implement by a terminal.

Optionally, information carried on the PSS indicates that the synchronization signal includes the SSS. In other words, the network apparatus may set different periodicities to send the PSS and the SSS. For example, the network apparatus sends the PSS every 20 milliseconds (ms), and sends the SSS every 80 ms. That is, the network apparatus sends the SSS once after sending the PSS three times. In this way, the PSS can indicate whether the network apparatus needs to send the SSS, so that the receiving end successfully receives the SSS based on the information indicated by the PSS.

In a possible design solution, the system information includes at least one of the following: a system frame number of the cell of the network apparatus, a subcarrier spacing indication, an intra-frequency cell reselection indicator, a frequency domain offset between the synchronization signal and a common resource, cell selection information, cell access-related information, serving cell configuration information, scheduling information of other system information, a connection setup failure control configuration, and a terminal timer configuration.

According to a fourth aspect, a communication method is provided. The method includes: determining whether a terminal is allowed to camp on a cell of a network apparatus; and sending a synchronization signal, where the synchronization signal carries a cell barred indicator, and the cell barred indicator indicates whether a terminal is allowed to camp on the cell of the network apparatus.

In a possible design solution, the synchronization signal includes a primary synchronization signal PSS and a secondary synchronization signal SSS, and the cell barred indicator is carried on the PSS, or the cell barred indicator is carried on the SSS.

In a possible design solution, the synchronization signal further carries at least one of the following: a cell identity of the cell of the network apparatus, an obtaining manner of the system information, and time information. The obtaining manner is any one of the following: directly receiving the system information from the network apparatus, or obtaining the system information by sending a first signal. The time information indicates time for directly receiving the system information or time for sending the first signal.

Optionally, the cell identity is carried on the SSS.

Further, the obtaining manner and/or the time information is carried on the PSS.

Further, the obtaining manner and/or the time information is carried on the SSS.

Further, when the obtaining manner is carried on the PSS, the time information is carried on the SSS; or when the time information is carried on the PSS, the obtaining manner is carried on the SSS.

Further, the SSS includes a first sequence and a second sequence, the first sequence is used to carry the cell identity, and the second sequence is used to carry at least one of the obtaining manner, the time information, and the cell barred indicator.

Further, the second sequence is used to scramble the first sequence.

Further, the second sequence is a Hadamard sequence.

Optionally, information carried on the PSS indicates that the synchronization signal includes the SSS.

In a possible design solution, the system information includes at least one of the following: a system frame number of the cell of the network apparatus, a subcarrier spacing indication, an intra-frequency cell reselection indicator, a frequency domain offset between the synchronization signal and a common resource, cell selection information, cell access-related information, serving cell configuration information, scheduling information of other system information, a connection setup failure control configuration, and a terminal timer configuration.

In addition, for technical effects of the method in the fourth aspect, refer to the technical effects of the method in the third aspect. Details are not described herein again.

According to a fifth aspect, a communication apparatus is provided. The communication apparatus includes modules configured to perform the method according to the first aspect, for example, a transceiver module and a processing module. For example, the transceiver module is configured to receive a synchronization signal from a network apparatus, where the synchronization signal carries an obtaining manner of system information; and the processing module is configured to obtain the system information based on the obtaining manner.

Optionally, the transceiver module may include a sending module and a receiving module. The sending module is configured to implement a sending function of the communication apparatus according to the fifth aspect, and the receiving module is configured to implement a receiving function of the communication apparatus according to the fifth aspect.

Optionally, the communication apparatus according to the fifth aspect may further include a storage module. The storage module stores a program or instructions. When the processing module executes the program or the instructions, the communication apparatus is enabled to perform the method according to the first aspect.

It may be understood that the communication apparatus according to the fifth aspect may be a terminal or a network apparatus, for example, a remote device, or may be a chip (system) or another part or component that may be disposed in a terminal or a network apparatus, or may be an apparatus that includes a terminal or a network apparatus. This is not limited in this application.

In addition, for technical effects of the communication apparatus according to the fifth aspect, refer to the technical effects of the method according to the first aspect. Details are not described herein again.

According to a sixth aspect, a communication apparatus is provided. The communication apparatus includes modules configured to perform the method according to the second aspect, for example, a transceiver module and a processing module. For example, the processing module is configured to control the transceiver module to send a synchronization signal carrying an obtaining manner of system information, and send the system information.

Optionally, the transceiver module may include a sending module and a receiving module. The sending module is configured to implement a sending function of the communication apparatus according to the sixth aspect, and the receiving module is configured to implement a receiving function of the communication apparatus according to the sixth aspect.

Optionally, the communication apparatus according to the sixth aspect may further include a storage module. The storage module stores a program or instructions. When the processing module executes the program or the instructions, the communication apparatus is enabled to perform the method according to the second aspect.

It may be understood that the communication apparatus according to the sixth aspect may be a terminal or a network apparatus, for example, a remote device, or may be a chip (system) or another part or component that may be disposed in a terminal or a network apparatus, or may be an apparatus that includes a terminal or a network apparatus. This is not limited in this application.

In addition, for technical effects of the communication apparatus according to the sixth aspect, refer to the technical effects of the method according to the second aspect. Details are not described herein again.

According to a seventh aspect, a communication apparatus is provided. The communication apparatus includes modules configured to perform the method in the third aspect, for example, a transceiver module and a processing module. For example, the transceiver module is configured to receive a synchronization signal from a network apparatus, where the synchronization signal carries a cell barred indicator, and the cell barred indicator indicates whether a terminal is allowed to camp on a cell of the network apparatus; and the processing module is configured to determine, based on the cell barred indicator, whether to obtain system information.

Optionally, the transceiver module may include a sending module and a receiving module. The sending module is configured to implement a sending function of the communication apparatus according to the seventh aspect, and the receiving module is configured to implement a receiving function of the communication apparatus according to the seventh aspect.

Optionally, the communication apparatus according to the seventh aspect may further include a storage module. The storage module stores a program or instructions. When the processing module executes the program or the instructions, the communication apparatus is enabled to perform the method in the third aspect.

It may be understood that the communication apparatus according to the seventh aspect may be a terminal or a network apparatus, for example, a remote device, or may be a chip (system) or another part or component that may be disposed in a terminal or a network apparatus, or may be an apparatus that includes a terminal or a network apparatus. This is not limited in this application.

In addition, for technical effects of the communication apparatus according to the seventh aspect, refer to the technical effects of the method according to the third aspect. Details are not described herein again.

According to an eighth aspect, a communication apparatus is provided. The communication apparatus includes modules configured to perform the method according to the fourth aspect, for example, a transceiver module and a processing module. For example, the processing module is configured to determine whether a terminal is allowed to camp on a cell of a network apparatus; and the transceiver module is configured to send a synchronization signal, where the synchronization signal carries a cell barred indicator, and the cell barred indicator indicates whether a terminal is allowed to camp on the cell of the network apparatus.

Optionally, the transceiver module may include a sending module and a receiving module. The sending module is configured to implement a sending function of the communication apparatus according to the eighth aspect, and the receiving module is configured to implement a receiving function of the communication apparatus according to the eighth aspect.

Optionally, the communication apparatus according to the eighth aspect may further include a storage module. The storage module stores a program or instructions. When the processing module executes the program or the instructions, the communication apparatus is enabled to perform the method according to the fourth aspect.

It may be understood that the communication apparatus according to the eighth aspect may be a terminal or a network apparatus, for example, a remote device, or may be a chip (system) or another part or component that may be disposed in a terminal or a network apparatus, or may be an apparatus that includes a terminal or a network apparatus. This is not limited in this application.

In addition, for technical effects of the communication apparatus according to the eighth aspect, refer to the technical effects of the method according to the fourth aspect. Details are not described herein again.

According to a ninth aspect, a communication apparatus is provided. The communication apparatus includes a processor, and the processor is configured to perform the method according to any one of the possible implementations of the first aspect, the second aspect, the third aspect, or the fourth aspect.

In a possible design solution, the communication apparatus according to the ninth aspect may further include a transceiver. The transceiver may be a transceiver circuit or an interface circuit. The transceiver may be used by the communication apparatus according to the ninth aspect to communicate with another communication apparatus.

In a possible design solution, the communication apparatus according to the ninth aspect may further include a memory. The memory and the processor may be integrated together, or may be disposed separately. The memory may be configured to store a computer program and/or data related to the method according to any one of the first aspect, the second aspect, the third aspect, or the fourth aspect.

In embodiments of this application, the communication apparatus according to the ninth aspect may be the terminal or the network apparatus according to any one of the first aspect, the second aspect, the third aspect, or the fourth aspect, or a chip (system) or another part or component that may be disposed in the terminal or the network apparatus, or an apparatus including the terminal or the network apparatus.

In addition, for technical effects of the communication apparatus according to the ninth aspect, refer to the technical effects of the method according to any one of the implementations of the first aspect, the second aspect, the third aspect, or the fourth aspect. Details are not described herein again.

According to a tenth aspect, a communication apparatus is provided. The communication apparatus includes a processor. The processor is coupled to a memory, and the processor is configured to execute a computer program stored in the memory, so that the communication apparatus performs the communication method according to any possible implementation of the first aspect, the second aspect, the third aspect, or the fourth aspect.

In a possible design solution, the communication apparatus according to the tenth aspect may further include a transceiver. The transceiver may be a transceiver circuit or an interface circuit. The transceiver may be used by the communication apparatus according to the tenth aspect to communicate with another communication apparatus.

In embodiments of this application, the communication apparatus according to the tenth aspect may be the terminal or the network apparatus according to any one of the first aspect, the second aspect, the third aspect, or the fourth aspect, or a chip (system) or another part or component that may be disposed in the terminal or the network apparatus, or an apparatus including the terminal or the network apparatus.

In addition, for technical effects of the communication apparatus according to the tenth aspect, refer to the technical effects of the method according to any one of the implementations of the first aspect, the second aspect, the third aspect, or the fourth aspect. Details are not described herein again.

According to an eleventh aspect, a communication apparatus is provided, and includes a processor and a memory. The memory is configured to store a computer program. When the processor executes the computer program, the communication apparatus is enabled to perform the method according to any one of the implementations of the first aspect, the second aspect, the third aspect, or the fourth aspect.

In a possible design solution, the communication apparatus according to the eleventh aspect may further include a transceiver. The transceiver may be a transceiver circuit or an interface circuit. The transceiver may be used by the communication apparatus according to the eleventh aspect to communicate with another communication apparatus.

In embodiments of this application, the communication apparatus according to the eleventh aspect may be the terminal or the network apparatus according to any one of the first aspect, the second aspect, the third aspect, or the fourth aspect, or a chip (system) or another part or component that may be disposed in the terminal or the network apparatus, or an apparatus including the terminal or the network apparatus.

In addition, for technical effects of the communication apparatus according to the eleventh aspect, refer to the technical effects of the method according to any one of the implementations of the first aspect, the second aspect, the third aspect, or the fourth aspect. Details are not described herein again.

According to a twelfth aspect, a communication chip is provided. The communication chip stores instructions, and when the chip runs on a communication device, the method according to any one of the implementations of the first aspect, the second aspect, the third aspect, or the fourth aspect is implemented.

According to a thirteenth aspect, a communication chip is provided, including a logic circuit and a communication interface. The logic circuit is configured to execute computer instructions, the communication interface is used by the communication chip to communicate with another apparatus or chip, and when the logic circuit executes the computer instructions, the method according to any implementation of the first aspect, the second aspect, the third aspect, or the fourth aspect is implemented.

According to a fourteenth aspect, a communication system is provided. The communication system includes an apparatus configured to perform the method in the first aspect and/or an apparatus configured to perform the method in the second aspect.

According to a fifteenth aspect, a communication system is provided. The communication system includes an apparatus configured to perform the method in the third aspect and/or an apparatus configured to perform the method in the fourth aspect.

According to a sixteenth aspect, a computer-readable storage medium is provided, and includes a computer program or instructions. When the computer program or the instructions are run on a computer, the computer is enabled to perform the method according to any one of the possible implementations of the first aspect, the second aspect, the third aspect, or the fourth aspect.

According to a seventeenth aspect, a computer program product is provided, and includes a computer program or instructions. When the computer program or the instructions are run on a computer, the computer is enabled to perform the method according to any one of the possible implementations of the first aspect, the second aspect, the third aspect, or the fourth aspect.

## BRIEF DESCRIPTION OF DRAWINGS

FIG. 1 is a diagram of a structure of a synchronization signal and physical broadcast channel block SSB according to an embodiment of this application;
FIG. 2 is a diagram of a multiplexing mode of an SSB and a system information block 1 SIB1 according to an embodiment of this application;
FIG. 3 is a diagram of sending an SSB and a SIB1 according to an embodiment of this application;
FIG. 4 is a diagram 1 of an architecture of a communication system according to an embodiment of this application;
FIG. 5 is a diagram 2 of an architecture of a communication system according to an embodiment of this application;
FIG. 6 is a schematic flowchart 1 of a communication method according to an embodiment of this application;
FIG. 7 is a diagram of time intervals between a synchronization signal and a first signal in different time division duplex TDD configurations according to an embodiment of this application;
FIG. 8 is a diagram of obtaining system information according to an embodiment of this application;
FIG. 9 is a schematic flowchart 2 of a communication method according to an embodiment of this application;
FIG. 10 is a diagram 1 of a structure of a communication apparatus according to an embodiment of this application; and
FIG. 11 is a diagram 2 of a structure of a communication apparatus according to an embodiment of this application.

## DESCRIPTION OF EMBODIMENTS

For ease of understanding, the following first describes technical terms in embodiments of this application.

1. SSB:

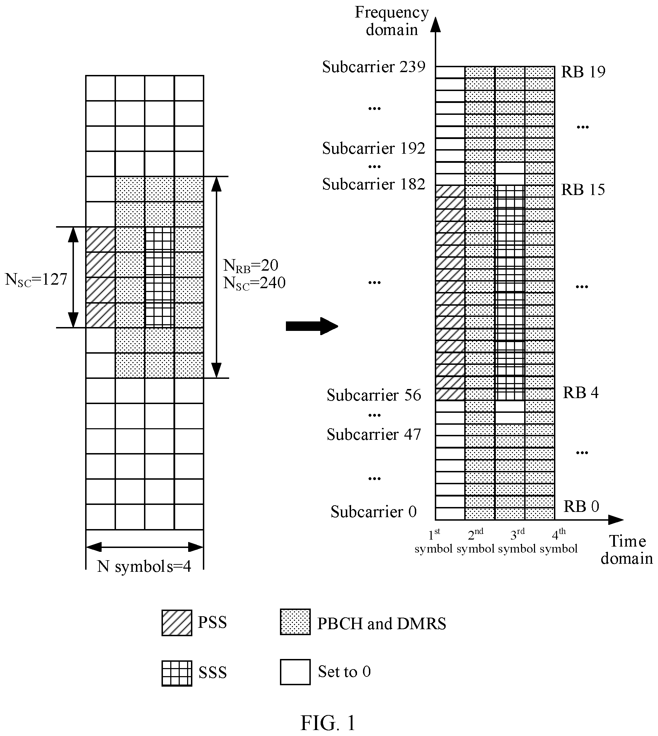

As shown in FIG. 1, in a cell search and synchronization procedure, a concept of an SSB is introduced in NR. The SSB includes a primary synchronization signal (primary synchronization signal, PSS), a secondary synchronization signal (secondary synchronization signal, SSS), a PBCH, and a demodulation reference signal (demodulation reference signal, DMRS). The SSB occupies four orthogonal frequency division multiplexing (orthogonal frequency division multiplexing, OFDM) symbols in time domain, and occupies a total of 240 subcarriers in frequency domain. The PSS, the SSS, and the PBCH are multiplexed together in a time division multiplexing (time division multiplexing, TDM) mode. The following separately describes the PSS, the SSS, and the PBCH.

(1) PSS:

The PSS is located on 127 subcarriers in the middle of the 1st symbol of the SSB, and uses an m-sequence, as shown in formula (1) to formula (3) below:

$$d_{PSS}(n) = 1 - 2x(m); \qquad (1)$$

$$m = \left(n + 43N_{ID}^{(2)}\right)\mathrm{mod}\ 127; \qquad (2)$$

$$0 \le n < 127; \qquad (3)$$

$x(i + 7) = (x(i + 4) + x(i))\mathrm{mod}\ 2$ and $[x(6)\ x(5)\ x(4)\ x(3)\ x(2)\ x(1)\ x(0)] = [1\ 1\ 1\ 0\ 1\ 1\ 0]$. It can be learned that a PSS sequence is determined by $N_{ID}^{(2)}$, and $N_{ID}^{(2)}$ has three possible values, that is, $N_{ID}^{(2)} \in \{0,1,2\}$. Therefore, there are three different PSS sequences. A terminal correlates a received signal with the three PSS sequences and performs peak value detection, to obtain a value of $N_{ID}^{(2)}$.

(2) SSS:

The SSS is located on 127 subcarriers in the middle of the 3rd symbol of the SSB, and uses a Gold sequence, as shown in formula (4) to formula (7) below:

$$d_{SSS}(n) = \left[1 - 2x_0\left((n + m_0)\mathrm{mod}\ 127\right)\right]\left[1 - 2x_1\left((n + m_1)\mathrm{mod}\ 127\right)\right]; \qquad (4)$$

$$m_0 = 15\left\lfloor\frac{N_{ID}^{(1)}}{112}\right\rfloor + 5N_{ID}^{(2)}; \qquad (5)$$

$$m_1 = N_{ID}^{(1)}\mathrm{mod}\ 112; \qquad (6)$$

$$0 \le n < 127; \qquad (7)$$

$x_0(i + 7) = (x_0(i + 4) + x_0(i))\mathrm{mod}\ 2$, $x_1(i + 7) = (x_1(i + 1) + x_1(i))\mathrm{mod}\ 2$, $[x_0(6)\ x_0(5)\ x_0(4)\ x_0(3)\ x_0(2)\ x_0(1)\ x_0(0)] = [0\ 0\ 0\ 0\ 0\ 0\ 1]$, and $[x_1(6)\ x_1(5)\ x_1(4)\ x_1(3)\ x_1(2)\ x_1(1)\ x_1(0)] = [0\ 0\ 0\ 0\ 0\ 0\ 1]$. It can be learned that $N_{ID}^{(1)}$ may be determined based on an SSS sequence, and $N_{ID}^{(1)} \in \{0,1,...,335\}$ is defined in a protocol.

After the PSS and the SSS are received, $N_{ID}^{(1)}$ and $N_{ID}^{(2)}$ may be determined. Based on $N_{ID}^{(1)}$ and $N_{ID}^{(2)}$, a cell identity (identity, ID) may be determined. That is, $N_{ID}^{cell} = 3N_{ID}^{(1)} + N_{ID}^{(2)}$.

(3) PBCH:

The PBCH mainly carries a MIB. The MIB defines most fundamental system information of a cell and a parameter required for decoding a SIB1. Information included in the MIB includes a system frame number, a subcarrier spacing indication, an offset k_ssb between an SS block (block) and a common resource boundary, a cell barred indicator (cellBarred), an intra-frequency cell reselection indicator (intraFreqReselection), a CoreSet0 and a search space configuration used for receiving the SIB1, and a protocol field pdcch-ConfigSIB 1. The system frame number includes a radio frame number, to indicate timing on a network side. The subcarrier spacing indicates a subcarrier spacing used for receiving a subsequent SIB1, other system information, paging, and a message 2 or a message 4 in an initial access procedure. The cell barred indicator indicates whether a terminal is allowed to access a current cell. The intra-frequency cell reselection indicator indicates whether a terminal in an intra-frequency cell is allowed to reselect to the current cell. That is, when a high-priority cell is barred, intra-frequency cell reselection is controlled.

It may be understood that more antennas are used in NR to enhance coverage. However, a large quantity of antennas cause a very narrow beam for antenna radiation, and a single narrow beam is difficult to cover an entire cell. Therefore, a beam sweeping method is introduced in NR to cover an entire cell. In other words, each cell periodically sends a plurality of SSBs in time domain. In a periodicity, each SSB has a unique number, that is, an SSB index (index). Each SSB beam corresponds to one SSB index. This group of SSB beams is referred to as an SSB burst set (SSB burst set).

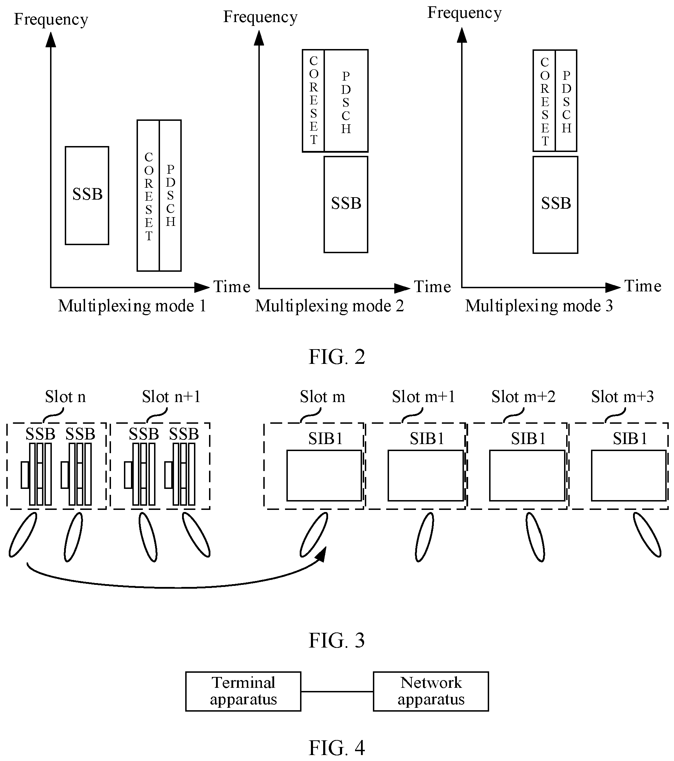

It may be further understood that, after successfully receiving and demodulating an SSB, a terminal may receive a SIB1 based on an indication in a PBCH, to obtain configuration information related to cell access. As shown in FIG. 2, a protocol defines three multiplexing modes of the SSB and the SIB1. The multiplexing mode may be obtained by using the pdcch-ConfigSIB1 field in the MIB with reference to a predefined table in the protocol.

As shown in FIG. 3, to reduce an access delay of a terminal, common information (an SSB and a SIB1) is periodically sent. The protocol defines that an SSB periodicity may be configured by the network side. For example, the SSB periodicity may be 5 ms, 10 ms, 20 ms, 40 ms, 80 ms, or 160 ms. A terminal that performs initial access may use a default value 20 ms for receiving. The SIB1 is also sent periodically. That is, an SIB1 periodicity is 160 ms. However, within the 160 ms, the SIB1 may be periodically and repeatedly sent a plurality of times. A default repetition periodicity may be 20 ms, and an actual repetition periodicity may depend on network implementation. In addition, a SIB1 repetition periodicity varies in different multiplexing modes of the SSB and the CoreSet. For example, for a multiplexing mode 1 of the SSB and the CoreSet in FIG. 2, a SIB1 repetition periodicity may be 20 ms. For another example, for a multiplexing mode 2 or a multiplexing mode 3 of the SSB and the CoreSet in the figure, a SIB1 repetition periodicity is the same as the SSB periodicity.

It can be learned that in a cell search and synchronization procedure, the terminal may obtain the MIB by using the PBCH in the SSB. Further, the terminal may obtain the SIB1 based on the CoreSet0 and the search space configuration in the MIB. However, in a future communication system, system information may be transmitted in a plurality of different manners. In other words, a manner in which the terminal obtains the system information may be different from the foregoing manner. How to specifically obtain the system information is a hot topic currently discussed.

For the foregoing technical problem, embodiments of this application provide the following technical solutions, to provide a new obtaining manner of the system information, so as to reduce overheads.

The following describes the technical solution of this application with reference to the accompanying drawings.

The technical solutions in embodiments of this application may be applied to various communication systems, for example, a 4th generation (4th generation, 4G) mobile communication system, such as a long term evolution (long term evolution, LTE) system, a 5th generation (5th generation, 5G) mobile communication system, such as a new radio (new radio, NR) system, and a communication system evolved after 5G, such as a 6th generation (6th generation, 6G) mobile communication system, or may be applied to a wireless fidelity (wireless fidelity, Wi-Fi) system, a vehicle-to-everything (vehicle to everything, V2X) communication system, a device-to-device (device-to-device, D2D) communication system, and an internet of vehicles communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design solution described as an "example" in this application should not be explained as being more preferred or having more advantages than another embodiment or design solution. Exactly, use of the term "example" is intended to present a concept in a specific manner.

In embodiments of this application, "information (information)", "signal (signal)", "message (message)", "channel (channel)", and "signaling (signaling)" may be used interchangeably sometimes. It should be noted that expressed meanings are consistent when differences are not emphasized. "Of (of)", "relevant (corresponding, relevant)", and "corresponding (corresponding)" may be used interchangeably sometimes. It should be noted that expressed meanings are consistent when differences are not emphasized. In addition, "/" in this application may be used to represent an "or" relationship.

In embodiments of this application, sometimes a subscript, for example, $W_1$, may be written incorrectly in a non-subscript form, for example, W1. Expressed meanings are consistent when differences are not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may learn that with the evolution of the network architecture and the emergence of new service scenarios, the technical solutions provided in embodiments of this application are also applicable to similar technical problems.

For ease of understanding embodiments of this application, a communication system shown in FIG. 4 is first used as an example to describe in detail a communication system applicable to embodiments of this application. For example, FIG. 4 is a diagram of an architecture of a communication system to which a communication method according to an embodiment of this application is applicable.

As shown in FIG. 4, the communication system includes a terminal apparatus and a network apparatus. For the terminal apparatus and the network apparatus, refer to the related descriptions of a "terminal 102" and a "network apparatus 101" in the following. Details are not described herein.

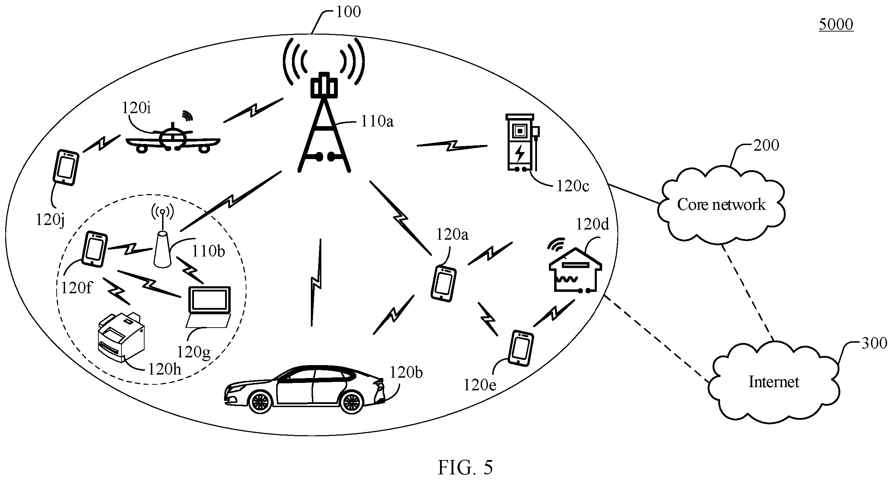

For ease of understanding of embodiments of this application, an application scenario to which this application is applicable is described by using an architecture of a communication system shown in FIG. 5 as an example. FIG. 5 is a diagram of a possible and non-limiting system. As shown in FIG. 5, a communication system 5000 includes a radio access network (radio access network, RAN) 100 and a core network (core network, CN) 200. The RAN 100 includes at least one network apparatus (101a and 101b in FIG. 5, collectively referred to as 110) and at least one terminal (102a to 102j in FIG. 5, collectively referred to as 102). The RAN 100 may further include another RAN node, for example, a wireless relay device and/or a wireless backhaul device (not shown in FIG. 5). The terminal 102 is connected to the network apparatus 101 in a wireless manner. The network apparatus 101 is connected to the core network 200 in a wireless or wired manner. A core network device in the core network 200 and the network apparatus 101 in the RAN 100 may be different physical devices, or may be a same physical device that integrates a logical function of the core network and a logical function of the radio access network.

The RAN 100 may be a 3rd generation partnership project (3rd generation partnership project, 3GPP)-related cellular system, for example, a 4G mobile communication system, a 5G mobile communication system, or a system evolving after 5G (for example, a 6G mobile communication system). The RAN 100 may alternatively be an open radio access network (open RAN, O-RAN or ORAN), a cloud radio access network (cloud radio access network, CRAN), or a Wi-Fi system. The RAN 100 may alternatively be a communication system that integrates two or more of the foregoing systems.

A terminal apparatus and a network apparatus provided in embodiments of this application may be applied to the network apparatus 101, or may be applied to the terminal 102. It may be understood that FIG. 5 shows only a possible architecture of the communication system to which embodiments of this application may be applied. In another possible scenario, the architecture of the communication system may alternatively include another device.

The network apparatus 101 is a node in a radio access network (radio access network, RAN), and may also be referred to as an access network device or a RAN node (or device). The network apparatus 101 is configured to assist the terminal in implementing radio access. A plurality of network apparatuses 101 in the communication system 6000 may be nodes of a same type, or may be nodes of different types. In some scenarios, roles of the network apparatus 101 and the terminal 102 are relative. For example, the network element 102i in FIG. 5 may be a helicopter or an uncrewed aerial vehicle, and may be configured as a mobile base station. For the terminal 102j that accesses the RAN 100 via the network element 102i, the network element 102i is a base station. However, for the base station 101a, the network element 102i is a terminal. The network apparatus 101 and the terminal 102 are sometimes both referred to as communication apparatuses. For example, the network elements 101a and 101b in FIG. 5 may be understood as communication apparatuses having functions of a base station, and the network elements 102a to 102j may be understood as communication apparatuses having functions of a terminal.

In a possible scenario, the network apparatus may be a base station (base station), an evolved NodeB (evolved NodeB, eNodeB), a transmission reception point (transmitting and receiving point, TRP), a transmission point (transmitting point, TP), a next-generation NodeB (next generation NodeB, gNB), a next-generation NodeB in a sixth generation (6th generation, 6G) mobile communication system, a base station in a future mobile communication system, a satellite, an access point (access point, AP) such as a home gateway, a router, a server, a switch, or a bridge in a Wi-Fi system, an integrated access and backhaul (integrated access and backhaul, IAB) node, or a network apparatus in a mobile switching center non-terrestrial network (non-terrestrial network, NTN) communication system, that is, may be deployed on a high-altitude platform, a satellite, or the like. The network apparatus may be a macro base station (for example, 110a in FIG. 5), a micro base station or an indoor base station (for example, 110b in FIG. 5), a relay node or a donor node, or a radio controller in a CRAN scenario. The network apparatus may alternatively be a device having a base station function in device to device (device to device, D2D) communication, internet of vehicles communication, unmanned aerial vehicle communication, or machine communication. Optionally, the network apparatus may alternatively be a server, a wearable device, a vehicle, a vehicle-mounted device, or the like. For example, an access network device in a vehicle to everything (vehicle to everything, V2X) technology may be a road side unit (road side unit, RSU).

In another possible scenario, a plurality of network apparatuses collaborate to assist the terminal in implementing radio access, and different network apparatuses respectively implement some functions of the base station. For example, the network apparatus may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network apparatus may be a CU node, a DU node, or a device including a CU node and a DU node. In addition, the CU may be classified as a network apparatus in an access network RAN, or the CU may be classified as a network apparatus in a core network CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

A form of the network apparatus is not limited in embodiments of this application. An apparatus configured to implement a function of the network apparatus may be a network apparatus, or may be an apparatus that can support the network apparatus in implementing the function, for example, a chip system. The apparatus may be installed in the network apparatus or used in cooperation with the network apparatus.

The terminal 102 may also be referred to as user equipment (user equipment, UE), a mobile station (mobile station, MS), a mobile terminal (mobile terminal, MT), a user apparatus, an access terminal, a subscriber unit, a subscriber station, a mobile station, a remote station, a remote terminal, a mobile device, a user terminal, a terminal device, a wireless communication device, a user agent, a user apparatus, or the like, or a device configured to provide voice or data connectivity for a user, or may be an internet of things device. For example, the terminal device includes a handheld device, a vehicle-mounted device, or the like that has a wireless connection function. Currently, the terminal may be a mobile phone (mobile phone), a tablet computer (Pad), a computer with a wireless transceiver function, a notebook computer, a palmtop computer, a mobile internet device (mobile internet device, MID), a wearable device (for example, a smartwatch, a smart band, or a pedometer), a vehicle-mounted device (for example, a vehicle, a bicycle, an electric vehicle, an airplane, a ship, a train, or a high-speed train), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control, a smart home device (for example, a refrigerator, a television, an air conditioner, or an electricity meter), a smart robot, a robot arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. The terminal device may alternatively be another device having functions of a terminal. For example, the terminal device may alternatively be a device that functions as a terminal in D2D communication.

A device form of the terminal is not limited in embodiments of this application. An apparatus configured to implement a function of the terminal device may be a terminal device, or may be an apparatus that can support the terminal device in implementing the function, for example, a chip system. The apparatus may be mounted in a terminal device or used in a manner of matching a terminal device. In embodiments of this application, the chip system may include a chip, or may include a chip and another discrete component.

It should be noted that the solutions in embodiments of this application may alternatively be applied to another communication system, and a corresponding name may alternatively be replaced with a name of a corresponding function in the another communication system.

In a communications system, the network apparatus may select a proper obtaining manner of system information based on an actual situation, and send the obtaining manner to the terminal apparatus along with a synchronization signal. In other words, the terminal apparatus may obtain the system information based on the obtaining manner selected by the network apparatus. For example, the terminal apparatus needs to actively request the system information, or the terminal apparatus needs to passively receive the system information. In this way, the synchronization signal can be reused to indicate the obtaining manner of the system information, and the obtaining manner does not need to be additionally configured. This can reduce overheads.

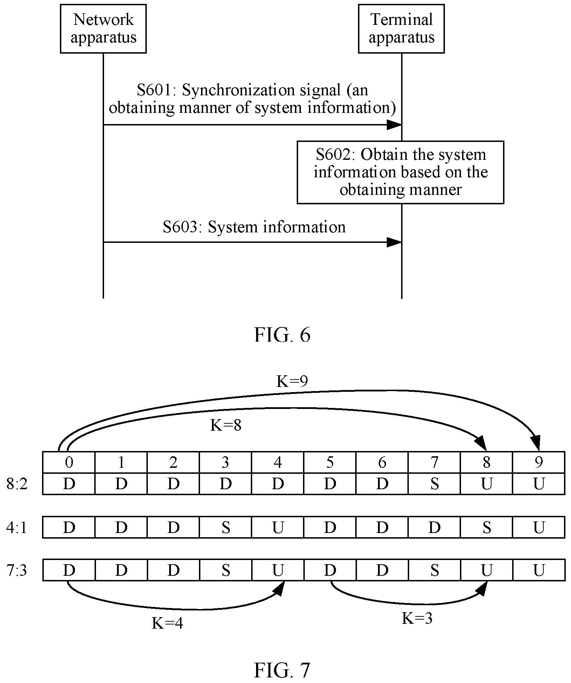

For ease of understanding, the following specifically describes the communication method provided in embodiments of this application with reference to FIG. 6.

For example, FIG. 6 is a schematic flowchart 1 of a communication method according to an embodiment of this application. The method is applicable to communication between a terminal apparatus and a network apparatus in the communication system.

As shown in FIG. 6, a procedure of the communication method is as follows.

S601: The network apparatus sends a synchronization signal, where the synchronization signal carries an obtaining manner of system information. The terminal apparatus receives the synchronization signal from the network apparatus.

The synchronization signal includes a PSS and/or an SSS. For example, when the PSS and the SSS have a same periodicity, the synchronization signal includes the PSS and the SSS. For another example, when the PSS and the SSS have different periodicities, the synchronization signal includes the PSS and/or the SSS. For example, when the PSS is sent every 20 ms and the SSS is sent every 80 ms, the synchronization signal includes the PSS or the PSS and the SSS.

When the PSS and the SSS have different periodicities, presence of the SSS may be indicated by information carried on the PSS, for example, indicated by information indicating that the SSS is present (for example, ON) or absent (for example, OFF). For example, if the information carried on the PSS indicates that the synchronization signal includes the SSS, the synchronization signal in this case includes the PSS and the SSS. Correspondingly, if the information carried on the PSS indicates that the synchronization signal does not include the SSS, the synchronization signal in this case includes the PSS and does not include the SSS.

For example, the PSS is sent every 20 ms, and the SSS is sent every 60 ms. That is, the SSS is sent once only after the PSS is sent twice. When the PSS is sent at the 20th ms and the 40th ms, the information carried on the PSS indicates that the synchronization signal does not include the SSS. In other words, after receiving the PSS, the terminal apparatus may detect the information. In this way, after receiving the PSS, the terminal apparatus may no longer receive the SSS. When the PSS is sent at the 60th ms, the information carried on the PSS indicates that the synchronization signal includes the SSS. In this way, the terminal apparatus may receive the SSS after receiving the PSS. In this way, the PSS and the SSS can be sent according to different periodicities. That is, a quantity of times of sending the SSS can be reduced. This helps control overheads of the network apparatus and better perform interference control.

It may be understood that the PSS and the SSS may be transmitted in a frequency division multiplexing (frequency division multiplexing, FDM) or TDM mode. A method in the conventional technology may be reused for the FDM or TDM mode of the PSS and the SSS, and details are not described herein.

The synchronization signal carries the obtaining manner of the system information. That is, the obtaining manner may be carried on the PSS or the SSS.

The system information includes most basic information of a cell of the network apparatus, and the terminal apparatus may access the cell based on the system information. The system information may include at least one of the following: a system frame number of the cell of the network apparatus, a subcarrier spacing indication, an intra-frequency cell reselection indicator, a frequency domain offset between the synchronization signal and a common resource, cell selection information, cell access-related information, serving cell configuration information, scheduling information of other system information, a connection setup failure control configuration, and a terminal timer configuration.

The cell selection information includes cell selection-related parameters, such as an S criterion. The cell access-related information includes cell-related information, such as a public land mobile network (public land mobile network, PLMN). The serving cell configuration information includes air interface configuration information of a serving cell. The scheduling information of other system information includes scheduling information such as a periodicity and a combination of system information other than a SIB1. The connection setup failure control configuration includes partial configuration information required by the terminal when connection setup fails. The terminal timer configuration includes configuration values of a plurality of timers defined in a protocol. It may be understood that, for the system frame number, the subcarrier spacing indication, and the intra-frequency cell reselection indicator, refer to the related descriptions in "(3) PBCH". Details are not described herein again.

The obtaining manner indicates a manner in which the terminal apparatus obtains the system information. There may be a plurality of obtaining manners. One possible obtaining manner is: The terminal apparatus directly receives the system information from the network apparatus. Another possible obtaining manner is: The terminal apparatus obtains the system information by sending a first signal. Descriptions are separately provided below.

Manner 1: The terminal apparatus directly receives the system information from the network apparatus.

Manner 1 may also be referred to as direct obtaining or passive receiving. In Manner 1, the network apparatus may periodically send the system information, for example, send the system information every 20 ms. The network apparatus may further send the system information in a beam sweeping manner. This is not limited. It may be understood that, in this case, the terminal apparatus periodically receives the system information sent by the network apparatus.

Manner 2: The terminal apparatus obtains the system information by sending the first signal.

Manner 2 may also be referred to as indirect obtaining or active requesting. In Manner 2, the terminal apparatus needs to send a specific signal, for example, the first signal, to the network apparatus. The network apparatus sends the system information to the terminal apparatus only after receiving the signal. In this case, the terminal apparatus correspondingly receives the system information.

It may be understood that, when there are two obtaining manners (for example, Manner 1 and Manner 2), the obtaining manner may be indicated by using 1 bit (bit). For example, 0 indicates that the terminal apparatus directly receives the system information from the network apparatus, and 1 indicates that the terminal apparatus obtains the system information by sending the first signal. For another example, 1 indicates that the terminal apparatus directly receives the system information from the network apparatus, and 0 indicates that the terminal apparatus obtains the system information by sending the first signal. This is not limited. It may be further understood that, when there are more manners of obtaining the system information from the network apparatus by the terminal apparatus, a quantity of bits used to indicate the obtaining manner may be correspondingly increased. For example, when there are four obtaining manners, 2 bits (bit) may be used for indication. Specifically, the four obtaining manners are Manner #1 to Manner #4, and 00, 01, 10, and 11 may respectively indicate Manner #1 to Manner #4.

In addition, "direct obtaining", "passive receiving", "indirect obtaining", and "active requesting" described in this embodiment of this application are merely examples of description. "Direct obtaining" and "passive receiving" may be replaced with any possible description. "Indirect obtaining" and "active requesting" may be replaced with any possible description. This is not limited in this embodiment of this application.

Optionally, the synchronization signal may further carry at least one of the following: a cell identity of the cell of the network apparatus, a cell barred indicator (cellBarred), and time information. The following separately describes the information.

The cell identity may also be referred to as a cell ID, and is used to represent different cells. For example, the cell identity of the cell of the network apparatus may be 100. Currently, there are 1008 cell IDs in NR. It may be understood that, in a future communication system, a quantity of cell IDs may increase or decrease. That is, a quantity of cell IDs is greater than 1008 or less than 1008. This is not limited in this embodiment of this application.

The cell barred indicator indicates whether a terminal is allowed to camp on the cell of the network apparatus, that is, whether a terminal is allowed to access the cell. For example, when the cell barred indicator is barred (Bar), it indicates that a terminal is not allowed to camp on the cell of the network apparatus. In this case, the terminal apparatus may no longer obtain the system information of the cell. Correspondingly, when the cell barred indicator is not barred (Not Bar), it indicates that a terminal is allowed to camp on the cell of the network apparatus. In this case, the terminal apparatus may obtain the system information of the cell, to access the cell.

It may be understood that the cell barred indicator may be indicated by 1 bit. For example, 0 indicates barred. That is, in this case, a terminal is not allowed to camp on the cell of the network apparatus. 1 indicates not barred. That is, in this case, a terminal is allowed to camp on the cell of the network apparatus. For another example, 0 indicates not barred, and 1 indicates barred. This is not limited.

The time information indicates time at which the terminal apparatus directly receives the system information, that is, time at which the network apparatus sends the system information, or time at which the terminal apparatus sends the first signal, that is, time at which the network apparatus receives the first signal.

For example, when the obtaining manner is that the terminal apparatus directly receives the system information from the network apparatus, the time information indicates the time at which the terminal apparatus directly receives the system information, to ensure that the terminal apparatus can successfully receive the system information sent by the network apparatus. When the obtaining manner is that the terminal apparatus obtains the system information by sending the first signal, the time information indicates the time at which the terminal apparatus sends the first signal, to ensure that the first signal sent by the terminal apparatus can be successfully received by the network apparatus, that is, the terminal apparatus can successfully request the system information.

It may be understood that the time indicated by the time information may be a time interval between sending the synchronization signal by the network apparatus and receiving the system information by the terminal apparatus, or a time interval between sending the synchronization signal by the network apparatus and sending the first signal by the terminal apparatus. For example, the time at which the terminal apparatus receives the system information or the time at which the terminal apparatus sends the first signal is n+K, where n is time at which the network apparatus sends the synchronization signal, and K is the time interval. The time interval may be a plurality of slots (slot). For example, the time interval is 5 slots, 6 slots, 7 slots, 8 slots, or another plurality of slots. This is not limited.

For example, as shown in FIG. 7, 0 to 9 in FIG. 7 respectively represent different slots. For example, 0 represents the 0th slot, and 1 represents the 1st slot. D in FIG. 7 indicates that downlink transmission may be performed, for example, downlink transmission may be performed in the 0th slot. S indicates that uplink transmission and downlink transmission may be performed, for example, uplink transmission and downlink transmission may be performed in the 7th slot. U indicates that uplink transmission may be performed, for example, uplink transmission may be performed in the 9th slot. For different time division duplex (time division duplex, TDD) configurations, a time interval (K in FIG. 7) may be different. For example, when the TDD configuration is 8:2, a time interval between a slot (0 in FIG. 7) in which the network apparatus sends the synchronization signal and a slot in which the terminal apparatus sends the first signal may be 8 slots or 9 slots. That is, the terminal apparatus may send the first signal in the 8th slot or the 9th slot. When the TDD configuration is 4:1, a time interval between a slot (0 in FIG. 7) in which the network apparatus sends the synchronization signal and a slot in which the terminal apparatus sends the first signal may be 4 slots. That is, the terminal apparatus may send the first signal

in the 4th slot. When the TDD configuration is 7:3, a time interval between a slot (0 or 5 in FIG. 7) in which the network apparatus sends the synchronization signal and a slot in which the terminal apparatus sends the first signal may be 4 slots or 3 slots. That is, the terminal apparatus may send the first signal in the 4th slot or the 8th slot.

It may be understood that the time interval between sending the synchronization signal by the network apparatus and receiving the system information by the terminal apparatus may be correspondingly set based on an actual situation. This is not limited in this embodiment of this application. In addition, the time information may be indicated by using N bits. A value of N is related to different cases corresponding to the time information, and may be set based on a specific situation. For example, the time information includes four cases, for example, four different time intervals between sending the synchronization signal by the network apparatus and receiving the system information by the terminal apparatus. In this case, 2 bits may indicate the different time intervals. That is, 00, 01, 10, and 11 may respectively indicate the four time intervals.

It may be further understood that the cell identity, the cell barred indicator, and the time information may be carried on the PSS and/or the SSS randomly. That is, each of the cell identity, the cell barred indicator, and the time information may be carried on the PSS and/or the SSS. Alternatively, the cell identity, the cell barred indicator, and the time information may be carried on the PSS and/or the SSS in a combined manner. This is specifically described in the following.

In a first possible implementation, the cell identity is carried on the SSS.

The SSS may have n sequences corresponding to different cell identities, where n is a total quantity of cell identities, and n is an integer greater than 0. For example, n is 1008. The sequence may be a Gold sequence, a Zadoff-Chu (ZC) sequence, or another sequence. This is not limited. It may be understood that, for specific principles of the Gold sequence and the Zadoff-Chu (ZC) sequence, refer to a principle in the conventional technology. Details are not described herein. In addition, the SSS may alternatively be in another form. This is not limited in this embodiment of this application.

The terminal apparatus may obtain the cell identity of the cell of the network apparatus by detecting the SSS. Because there are usually a large quantity of cell identities, that is, indication overheads that indicate the cell identities are large, carrying the cell identities on the SSS can avoid high complexity of the PSS caused by using the PSS to carry the cell identities. This can avoid a case in which when the terminal apparatus performs downlink synchronization (coarse synchronization) based on the PSS, detection complexity of the terminal apparatus is high due to high complexity of the PSS, and time for downlink synchronization (coarse synchronization) is excessively long.

Optionally, the cell barred indicator and/or the time information is carried on the PSS. In other words, the PSS may carry the cell barred indicator, the time information, or the cell barred indicator and the time information. Specific content carried on the PSS may be set based on an actual situation.

Further, when the cell barred indicator is carried on the PSS, the time information is carried on the SSS; or when the time information is carried on the PSS, the cell barred indicator is carried on the SSS.

Optionally, the cell barred indicator and/or the time information is carried on the SSS. In other words, the SSS may carry the cell barred indicator, the time information, or the cell barred indicator and the time information. The cell barred indicator and/or the time information is carried on the SSS, so that the PSS can carry less information. In this way, high complexity of the PSS can be avoided, so that the terminal apparatus can complete downlink synchronization more quickly when performing downlink synchronization based on the PSS.

Further, when the cell barred indicator is carried on the PSS, the time information is carried on the SSS; or when the time information is carried on the PSS, the cell barred indicator is carried on the SSS.

In a second possible implementation, the cell barred indicator and/or the time information is carried on the PSS. In other words, the PSS may carry the cell barred indicator, the time information, or the cell barred indicator and the time information.

Optionally, when the cell barred indicator is carried on the PSS, the time information is carried on the SSS; or when the time information is carried on the PSS, the cell barred indicator is carried on the SSS.

It may be understood that, in the second possible implementation, the cell identity may be carried on the SSS and/or the PSS. To avoid high complexity of the PSS, the cell identity may be carried on the SSS.

In a third possible implementation, the cell barred indicator and/or the time information is carried on the SSS. In other words, the SSS may carry the cell barred indicator, the time information, or the cell barred indicator and the time information.

Optionally, when the cell barred indicator is carried on the PSS, the time information is carried on the SSS; or when the time information is carried on the PSS, the cell barred indicator is carried on the SSS.

It may be understood that, in the third possible implementation, the cell identity may be carried on the SSS and/or the PSS. To avoid high complexity of the PSS, the cell identity may be carried on the SSS.

It may be understood that the foregoing content describes various information (the obtaining manner, the cell identity, the cell barred indicator, and the time information) that can be carried on the PSS and the SSS. The following describes a generation manner of the PSS and the SSS carrying the various information.

1. PSS

The PSS has a total of $n_1$ sequences. That is, the PSS corresponds to $n_1$ sequences. A value of $n_1$ is related to a quantity of pieces of information carried on the PSS and different cases of each piece of information. For example, if each piece of information has two cases, when the PSS carries one piece of information, $n_1$ is 2. That is, two sequences may indicate different cases of the piece of information. When the PSS carries two pieces of information, $n_1$ is 4. That is, four sequences may indicate different cases of the two pieces of information. When the PSS carries three pieces of information, $n_1$ is 8. That is, eight sequences may indicate different cases of the three pieces of information. It may be understood that when the information carried on the PSS has a plurality of cases, for example, the time information includes four different time intervals, a quantity of sequences corresponding to the PSS changes accordingly. In addition, the $n_1$ sequences may be orthogonal, and the $n_1$ sequences may be generated based on different cyclic shifts, or may be generated by using different root sequences. Specifically, a method in the conventional technology may be reused for implementation, and details are not described herein.

For example, when the PSS carries the obtaining manner and the cell barred indicator, because the obtaining manner includes two cases: direct obtaining and indirect obtaining, and the cell barred indicator includes two cases: barred and not barred, the PSS has a total of 4 sequences. In this case, a manner of generating the PSS may be: $d_{PSS}(n) = 1 - 2x(m)$, $m = (n + 29N_{AC})mod\,127$, $N_{AC} = \{0,1,2,3\}$, where $x(i+7) = (x(i+4) + x(i))mod\,2$, and *[x(6) x(5) x(4) x(3) x(2) x(1) x(0)]* = [1 1 1 0 1 1 0].

As shown in the following Table 1, $N_{AC}$ corresponds to different obtaining manners and cell barred indicators. For example, when $N_{AC}$ is 0, the obtaining manner is indirect obtaining, and the cell barred indicator is barred. That is, a terminal is not allowed to camp on. When $N_{AC}$ is 1, the obtaining manner is indirect obtaining, and the cell barred indicator is not barred. That is, a terminal is allowed to camp on. When $N_{AC}$ is 2, the obtaining manner is direct obtaining, and the cell barred indicator is barred. When $N_{AC}$ is 3, the obtaining manner is indirect obtaining, and the cell barred indicator is not barred. It may be understood that values of $N_{AC}$ in Table 1 may be interchanged for cases of the obtaining manner and the cell barred indicator. For example, if 0 and 2 are interchanged, when $N_{AC}$ is 0, the obtaining manner is direct obtaining, and the cell barred indicator is barred; and when $N_{AC}$ is 2, the obtaining manner is indirect obtaining, and the cell barred indicator is barred. In other words, cases of the obtaining manner and the cell barred indicator corresponding to different values of $N_{AC}$ may be customized. This is not limited in this embodiment of this application.

Table 1

| $N_{AC}$ | Obtaining manner | Cell barred indicator |
|---|---|---|
| 0 | Indirect obtaining | Barred |
| 1 | Indirect obtaining | Not barred |
| 2 | Direct obtaining | Barred |
| 3 | Direct obtaining | Not barred |

It can be learned that a value of $N_{AC}$ is related to $n_1$, that is, $N_{AC} = \{0,1, ..., n_1 - 1\}$. When the information carried on the PSS changes, the generation manner of the PSS may be adjusted accordingly. For example, the value of $N_{AC}$ and a coefficient in front of $N_{AC}$ in the value of $m$ are changed. The coefficient is a prime number closest to a value obtained by dividing 127 by $n_1$. For example, when $n_1$ is 2, the coefficient in front of $N_{AC}$ may be 61. For another example, when $n_1$ is 4, the coefficient in front of $N_{AC}$ may be 29.

It may be understood that a correspondence (a relationship shown in Table 1) between $N_{AC}$ and the information carried on the PSS may be preset or predefined in a protocol, so that after determining the value of $N_{AC}$, the terminal apparatus may determine, based on the correspondence, the information carried on the PSS. In addition, the PSS may be generated in another manner. This is not limited in this embodiment of this application.

2. SSS

The SSS may include a first sequence and a second sequence. The first sequence is used to carry the cell identity, and the second sequence is used to carry at least one of the cell barred indicator, the time information, and the obtaining manner. For example, when the SSS carries the cell identity and the time information, the first sequence is used to carry the cell identity, and the second sequence is used to carry the time information.

In a possible implementation, the first sequence and the second sequence may be directly combined together to form the SSS. For example, both the first sequence and the second sequence are m-sequences, and are combined into a Gold sequence by multiplication. For a specific principle of the m-sequence and the Gold sequence, refer to a principle in the conventional technology. Details are not described herein.

In another possible implementation, the second sequence may be used to scramble the first sequence. That is, the second sequence is a scrambling sequence.

In this case, an SSS sequence may be $d_{SSS}(n) = a_p(n)b_q(n)$, $p = \{0,1, ... , MaxCellId - 1\}$, $q = \{0,1, ..., x\}$. $a_p(n)$ is the first sequence, and $a_p(n)$ may be a Gold sequence or a ZC sequence. A value of $p$ is 0 to $MaxCellId - 1$, and $MaxCellId$ is a total quantity of cell identities. $b_q(n)$ is the second sequence (a scrambling sequence), and $b_q(n)$ may be a Hadamard (Hadamard) sequence. For a specific principle of the Hadamard sequence, refer to a principle in the conventional technology. Details are not described herein. A value of $q$ is related to a quantity of pieces of information carried on the second sequence and different cases of each piece of information. For example, if each piece of information has two cases, when the second sequence carries one piece of information, a value of q is 0 or 1; when the second sequence carries two pieces of information, a value of q is 0 to 3; and when the second sequence carries three pieces of information, a value of q is 0 to 7. It may be understood that when the information carried on the second sequence has a plurality of cases, the value of q changes accordingly. It can be learned that a value of $x$ is a value obtained by subtracting 1 from a total quantity of different cases.

The foregoing example is still used. When the SSS carries the cell identity and the time information, the SSS sequence may be $d_{SSS}(n) = a_p(n)b_q(n)$, $p = \{0,1, ...,MaxCellId - 1\}$, $q = \{0,1, ... ,3\}$. $a_p(n)$ is the first sequence and is used to carry the cell identity, and $b_q(n)$ is the second sequence and is used to carry the time information. As shown in the following Table 2, the value of $q$ is 0 to 3. That is, a different value of $q$ represents one type of time information. For example, when $q$ is 0, the time information is 3 slots; when $q$ is 1, the time information is 4 slots; when $q$ is 2, the time information is 8 slots; and when $q$ is 3, the time information is 9 slots. It may be understood that Table 2 is merely an example of a correspondence between different values of q and the time information. When the second sequence carries different information, cases corresponding to values of q change accordingly.

Table 2

| q | Time information |
|---|---|
| 0 | 3 slots |
| 1 | 4 slots |
| 2 | 8 slots |
| 3 | 9 slots |

It may be understood that a manner in the conventional technology may be reused to generate $a_p(n)$, and details are not described herein. In addition, because a length of a Hadamard sequence is usually $2^N$, and a length of $a_p(n)$ is uncertain. For example, a length of an SSS in NR is 127. $b_q(n)$ may be an intercepted sequence part, or a cyclic repetition based on a short sequence. For example, if a length of $a_p(n)$ is 127, $b_q(n)$ may be the first 127 bits of a Hadamard sequence with a length of 128, or $b_q(n)$ is a cyclic repetition based on a Hadamard sequence with a length of 64. A Hadamard sequence with a length of 128 is used as an example, a generation manner of $b_q(n)$ is

$$b_q(n) = Hadamard_{S_q}^{128*128}[mod(n, 128)]$$, $q = \{0,1,2,3\}$, $S_0 = 0$, $S_1 = 31$, $S_2 = 63$, $S_3 = 127$. In addition, a correspondence (a relationship shown in Table 2) between q and information carried on the SSS may be preset or predefined in a protocol, so that after the value of q is determined, the information carried on the second sequence can be determined. In addition, the SSS may be generated in another manner. This is not limited in this embodiment of this application.

It may be further understood that, when the SSS carries only the cell identity, or carries only at least one of the cell barred indicator, the time information, and the obtaining manner, the SSS may be represented by only the first sequence, and a specific generation manner may reuse a manner in the conventional technology. Details are not described herein.

It may be further understood that the foregoing describes a manner in which the obtaining manner, the cell identity, the cell barred indicator, and the time information may be carried on the PSS and/or the SSS, and a manner in which the PSS and the SSS are generated. The following uses an example to describe a carrying manner of each piece of information when the synchronization signal carries different type of information.

Example 1: The synchronization signal carries the obtaining manner and the cell identity.

In this case, there may be two manners of carrying the obtaining manner and the cell identity on the synchronization signal, which are separately described in the following.

(1) The PSS carries the obtaining manner, and the SSS carries the cell identity.

The PSS corresponds to two sequences, and the two sequences respectively indicate the terminal apparatus to directly receive the system information from the network apparatus, and the terminal apparatus to obtain the system information by sending the first signal. For example, a correspondence (denoted as a correspondence #1) between the two sequences and different values (for example, 0 and 1) may be set. For example, a sequence #1 corresponds to 0, and a sequence #2 corresponds to 1. Then, a correspondence (denoted as a correspondence #2) between different values and different cases is set. For example, 0 corresponds to directly receiving the system information by the terminal apparatus from the network apparatus, and 1 corresponds to obtaining the system information by sending the first signal by the terminal apparatus. In this way, the sequence used by the PSS may be determined based on an actual situation. For example, the sequence used by the PSS is the sequence #1. After receiving the PSS, the terminal apparatus may detect the PSS to obtain a value corresponding to the sequence #1, that is, 0. Then, the terminal apparatus may determine, based on 0, to directly receive the system information from the network apparatus. It may be understood that the correspondence #1 and the correspondence #2 may be preset or predefined in a protocol.

In this case, the SSS may include only the first sequence. That is, only the first sequence indicates the cell identity.

(2) The SSS carries the obtaining manner and the cell identity.

The first sequence of the SSS indicates the cell identity, and the second sequence of the SSS indicates the obtaining manner. In this case, the PSS may include only one sequence used by the terminal apparatus to perform downlink synchronization (coarse synchronization).

Example 2: The synchronization signal carries the obtaining manner, the cell identity, and the cell barred indicator.

In this case, a time relationship may be preset or predefined in a protocol. For example, an interval between time at which the network apparatus sends the synchronization signal and time at which the terminal apparatus receives the system information is predefined as 10 slots. For another example, an interval between time at which the network apparatus sends the synchronization signal and time at which the terminal apparatus sends the first signal is predefined as 9 slots. In other words, in this case, the network apparatus does not need to send the time information to indicate time at which the terminal apparatus directly receives the system information or sends the first signal.

In Example 2, there may be four manners of carrying the obtaining manner, the cell identity, and the cell barred indicator on the synchronization signal, which are separately described in the following.

(1) The PSS carries the cell barred indicator, and the SSS carries the obtaining manner and the cell identity.

The PSS corresponds to two sequences, and the two sequences respectively indicate that a terminal is allowed to camp on the cell of the network apparatus, that is, a case in which the cell barred indicator is not barred, and that a terminal is not allowed to camp on the cell of the network apparatus, that is, a case in which the cell barred indicator is barred. The first sequence of the SSS indicates the cell identity, and the second sequence of the SSS indicates the obtaining manner, for example, by using the $0^{th}$ and $63^{rd}$ rows of a 128*128 Hadamard sequence of the second sequence.

(2) The PSS carries the obtaining manner, and the SSS carries the cell barred indicator and cell identity.

The PSS corresponds to two sequences, and the two sequences respectively indicate the terminal apparatus to directly receive the system information from the network apparatus, and the terminal apparatus to obtain the system information by sending the first signal. The first sequence of the SSS indicates the cell identity, and the second sequence of the SSS indicates the cell barred indicator, for example, by using the $0^{th}$ and $63^{rd}$ rows of a 128*128 Hadamard sequence of the second sequence.

(3) The PSS carries the obtaining manner and the cell barred indicator, and the SSS carries the cell identity.

The PSS corresponds to four sequences. For a correspondence between the sequences and the obtaining manner and the cell barred indicator, refer to Table 1. In this case, the SSS may include only the first sequence. That is, only the first sequence indicates the cell identity.

(4) The SSS carries the obtaining manner, the cell identity, and the cell barred indicator.

The first sequence of the SSS indicates the cell identity, and the second sequence of the SSS indicates the obtaining manner and the cell barred indicator, for example, by using the $0^{th}$, $31^{st}$, $63^{rd}$, and $127^{th}$ rows of a 128*128 Hadamard sequence of the second sequence. In this case, the PSS may include only one sequence used by the terminal apparatus to perform downlink synchronization.

Example 3: The synchronization signal carries the obtaining manner, the cell identity, the cell barred indicator, and the time information.

In this case, there may be two manners of carrying the obtaining manner, the cell identity, the cell barred indicator, and the time information on the synchronization signal, which are separately described in the following.

(1) The PSS carries the obtaining manner and the cell barred indicator, and the SSS carries the cell identity and the time information.

The PSS corresponds to four sequences. For a correspondence between the sequences and the obtaining manner and the cell barred indicator, refer to Table 1. The first sequence of the SSS indicates the cell identity, and the second sequence of the SSS indicates the time information.

(2) The PSS carries time information, and the SSS carries the cell identity, the obtaining manner, and the cell barred indicator.

The PSS corresponds to L sequences, and a value of L is related to a quantity of time intervals in the time information. For example, if the time information indicates four time intervals, the PSS corresponds to four sequences. The first sequence of the SSS indicates the cell identity, and the second sequence of the SSS indicates the obtaining manner and the cell barred indicator, for example, by using the $0^{th}$, $31^{st}$, $63^{rd}$, and $127^{th}$ rows of a 128*128 Hadamard sequence of the second sequence.

It may be understood that, when the PSS corresponds to a plurality of sequences, different cases corresponding to the sequences are set, which is similar to an implementation principle described in (1) in Example 1. Therefore, reference may be made for understanding, and details are not described herein again.

It may be further understood that the foregoing obtaining manner may be configured by the network apparatus by default, or the obtaining manner may be dynamically determined by the network apparatus based on an actual situation. This is specifically described in the following.

In a possible implementation, the network apparatus may determine the obtaining manner based on a quantity of served users. To be specific, when the quantity of served users is greater than or equal to a quantity threshold, the obtaining manner is directly receiving the system information from the network apparatus; or when the quantity of served users is less than the quantity threshold, the obtaining manner is obtaining the system information by sending the first signal. The quantity threshold may be set based on an actual situation. This is not limited in this embodiment of this application.

In another possible implementation, the network apparatus may determine the obtaining manner based on an amount of user data. To be specific, when the amount of user data is greater than or equal to a data amount threshold, the obtaining manner is directly receiving the system information from the network apparatus; or when the amount of user data is less than the data amount threshold, the obtaining manner is obtaining the system information by sending the first signal. The data amount threshold may be set based on an actual situation. This is not limited in this embodiment of this application.

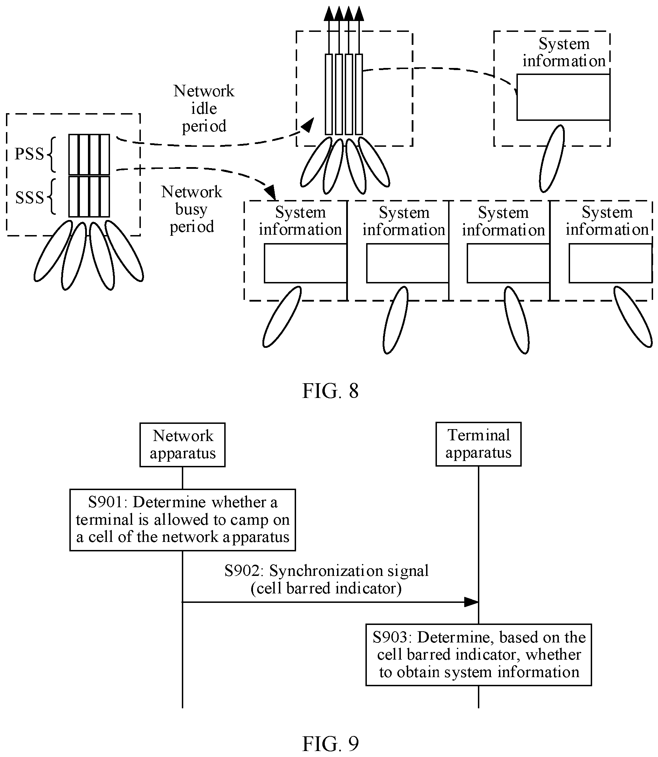

It can be seen that, as shown in FIG. 8, for a network idle period or a network busy period, the network apparatus may select different obtaining manners. For example, in the network busy period, the network apparatus may periodically broadcast the system information because the quantity of served users is large or the amount of user data is large. In this case, the terminal apparatus may directly receive the system information. In the network idle period, because the quantity of served users is small, or the amount of user data is small, the network apparatus may send the system information on demand. That is, the terminal apparatus sends the first signal, and the network apparatus sends the system information after receiving the first signal. In this way, network energy saving can be better implemented.

After determining the obtaining manner, the network apparatus may send the synchronization signal carrying the obtaining manner. Correspondingly, after receiving the synchronization signal from the network apparatus, the terminal apparatus may detect the synchronization signal to obtain the obtaining manner.

S602: The terminal apparatus obtains the system information based on the obtaining manner.

For example, when the obtaining manner is directly receiving the system information from the network apparatus, the terminal apparatus may determine, based on preset time information or time information predefined in a protocol, for example, the time interval between the time at which the network apparatus sends the synchronization signal and the time at which the terminal apparatus receives the system information, or based on the time information detected in the synchronization signal, a time unit for receiving the system information.

When the obtaining manner is obtaining the system information by sending the first signal, the terminal apparatus may determine, based on preset time information or time information predefined in a protocol, for example, a time interval between time at which the network apparatus sends the synchronization signal and time at which the terminal apparatus sends the first signal, or based on the time information detected in the synchronization signal, a time unit for sending the first signal, and send the first signal in the time unit. Correspondingly, the network apparatus receives the first signal from the terminal apparatus.

It may be understood that the time unit may be a radio frame, a subframe, a slot, or a symbol. This is not limited in this embodiment of this application.

It may be further understood that, when the terminal apparatus sends the first signal, the first signal may carry information about optimal beams. The optimal beams may include a plurality of beams, so that the network apparatus can select one beam from the optimal beams to send the system information. The information about the optimal beams may be explicitly indicated, for example, by using a beam index indication carried on the first signal; or may be implicitly indicated, for example, based on a timing relationship between the synchronization signal and the first signal. Synchronization signals of different beam indexes occupy different symbols in time domain. Correspondingly, sending of the first signal also corresponds to different symbols.

S603: The network apparatus sends the system information. The terminal apparatus receives the system information from the network apparatus.

For example, when the obtaining manner is directly receiving the system information from the network apparatus, the network apparatus may repeatedly send the system information in a beam sweeping manner. Correspondingly, the terminal apparatus may receive the system information. It may be understood that a time unit for sending the system information may be preset or predefined in a protocol, or may be determined by the network apparatus. This is not limited in this embodiment of this application.

When the obtaining manner is obtaining the system information by sending the first signal, the network apparatus may send the system information after receiving the first signal from the terminal apparatus. Correspondingly, the terminal apparatus receives the system information.

In conclusion, in this embodiment of this application, the network apparatus may send the synchronization signal carrying the obtaining manner, to indicate the obtaining manner used by the terminal apparatus to obtain the system information. In this way, it can be ensured that the terminal apparatus successfully obtains the system information in a correct obtaining manner, and the synchronization signal can be reused to indicate the obtaining manner of the system information, and the obtaining manner does not need to be additionally configured. This can reduce overheads.

As shown in FIG. 9, an embodiment of this application provides the following technical solution, to reduce energy consumption of a terminal apparatus. The following describes the technical solution with reference to the accompanying drawings.

For ease of understanding, the following specifically describes the communication method provided in embodiments of this application with reference to FIG. 9.

For example, FIG. 9 is a schematic flowchart 2 of a communication method according to an embodiment of this application. The method is applicable to communication between a terminal apparatus and a network apparatus in the communication system.

As shown in FIG. 9, a procedure of the communication method is as follows.

S901: The network apparatus determines whether a terminal is allowed to camp on a cell of the network apparatus.

The network apparatus may determine, based on an actual situation, whether a terminal is allowed to camp on the cell of the network apparatus, and a manner in the conventional technology may be reused for the network apparatus to determine whether a terminal is allowed to camp on the cell of the network apparatus. Details are not described herein.

S902: The network apparatus sends a synchronization signal, where the synchronization signal carries a cell barred indicator. Correspondingly, the terminal apparatus receives the synchronization signal from the network apparatus.

The synchronization signal includes a PSS and/or an SSS. For the PSS and the SSS, refer to the related descriptions in S601. Details are not described herein again.

In a possible implementation, information carried on the PSS indicates that the synchronization signal includes the SSS. For details, refer to the related descriptions in S601. Details are not described herein again.

The PSS or the SSS carries the cell barred indicator. That is, the cell barred indicator may be carried on the PSS or the SSS.

The cell barred indicator indicates whether a terminal is allowed to camp on the cell of the network apparatus. The cell barred indicator is related to a result of S901. That is, if the network apparatus determines, in S901, that a terminal is not allowed to camp on the cell of the network apparatus, the cell barred indicator carried on the synchronization signal is barred. Correspondingly, if the network apparatus determines, in S901, that a terminal is allowed to camp on the cell of the network apparatus, the cell barred indicator carried on the synchronization signal is not barred. For the cell barred indicator, refer to the related descriptions in S601. Details are not described herein again.

The cell barred indicator is carried on the PSS or the SSS, so that after receiving the PSS or the SSS, the terminal apparatus may obtain the cell barred indicator of the cell of the network apparatus by detecting the PSS or the SSS, to determine, based on the cell barred indicator, whether to subsequently access the cell.

Optionally, the synchronization signal may further carry at least one of the following: a cell identity of the cell of the network apparatus, an obtaining manner of system information, and time information. The obtaining manner is any one of the following: directly receiving the system information from the network apparatus, or obtaining the system information by sending a first signal. The system information includes at least one of the following: a system frame number of the cell of the network apparatus, a subcarrier spacing indication, an intra-frequency cell reselection indicator, a frequency domain offset between the synchronization signal and a common resource, cell selection information, cell access-related information, serving cell configuration information, scheduling information of other system information, a connection setup failure control configuration, and a terminal timer configuration. The time information indicates time for directly receiving the system information or time for sending the first signal. For the cell identity, the obtaining manner, the system information, and the time information, refer to the related descriptions in S601. Details are not described herein again.

It may be understood that the cell identity, the obtaining manner, and the time information may be carried on the PSS and/or the SSS randomly. That is, each of the cell identity, the obtaining manner, and the time information may be carried on the PSS and/or the SSS. Alternatively, the cell identity, the obtaining manner, and the time information may be carried on the PSS and/or the SSS in a combined manner. This is specifically described in the following.

In a first possible implementation, the cell identity is carried on the SSS. For details, refer to the related descriptions in S601. Details are not described herein again.

Optionally, the obtaining manner and/or the time information is carried on the PSS. In other words, the PSS may carry the obtaining manner, the time information, or the obtaining manner and the time information. Specific content carried on the PSS may be set based on an actual situation.

Further, when the obtaining manner is carried on the PSS, the time information is carried on the SSS; or when the time information is carried on the PSS, the obtaining manner is carried on the SSS.

Optionally, the obtaining manner and/or the time information is carried on the SSS. In other words, the SSS may carry the obtaining manner, the time information, or the obtaining manner and the time information. The obtaining manner and/or the time information is carried on the SSS, so that the PSS can carry less information. In this way, high complexity of the PSS can be avoided, so that the terminal apparatus can complete downlink synchronization more quickly when performing downlink synchronization based on the PSS.

Further, when the obtaining manner is carried on the PSS, the time information is carried on the SSS; or when the time information is carried on the PSS, the obtaining manner is carried on the SSS.

In a second possible implementation, the obtaining manner and/or the time information is carried on the PSS.

Optionally, when the obtaining manner is carried on the PSS, the time information is carried on the SSS; or when the time information is carried on the PSS, the obtaining manner is carried on the SSS.

It may be understood that, in the second possible implementation, the cell identity may be carried on the SSS and/or the PSS. To avoid high complexity of the PSS, the cell identity may be carried on the SSS.

In a third possible implementation, the obtaining manner and/or the time information is carried on the SSS.

Optionally, when the obtaining manner is carried on the PSS, the time information is carried on the SSS; or when the time information is carried on the PSS, the obtaining manner is carried on the SSS.

It may be understood that, in the third possible implementation, the cell identity may be carried on the SSS and/or the PSS. To avoid high complexity of the PSS, the cell identity may be carried on the SSS.

It may be understood that, for generation manners of the PSS and the SSS, and for carrying manners of different information when the synchronization signal carries the information, refer to the related descriptions in S601. Details are not described herein again.

It can be learned that a difference between this embodiment (S902) of this application and the foregoing embodiment (S601) lies in that: In this embodiment of this application, the synchronization signal may include the cell barred indicator, or the cell barred indicator and other information (denoted as other information #1), and the other information #1 includes at least one of the cell identity, the obtaining manner, and the time information. In the foregoing embodiment, the synchronization signal may include the obtaining manner, or the obtaining manner and other information (denoted as other information #2). The other information #2 includes at least one of the cell identity, the cell barred indicator, and the time information. In the two embodiments, definitions of the information, generation manners of the synchronization signal, and carrying manners are of similar implementation principles. Therefore, reference may be made to the two embodiments for understanding, and details are not described herein again.

After receiving the synchronization signal from the network apparatus, the terminal may detect the synchronization signal to obtain information carried on the synchronization signal, for example, the cell barred indicator.

S903: The terminal apparatus determines, based on the cell barred indicator, whether to obtain the system information.

For example, if the cell barred indicator is barred, it indicates that the terminal apparatus is not allowed to camp on the cell of the network apparatus. That is, the terminal apparatus cannot access the cell. In this case, the terminal apparatus may no longer obtain the system information. Correspondingly, if the cell barred indicator is not barred, it indicates that the terminal apparatus is allowed to camp on the cell of the network apparatus. That is, the terminal apparatus can access the cell. In this case, the terminal apparatus may continue to obtain the system information.

It may be understood that, if the synchronization signal further carries the obtaining manner, the terminal apparatus may directly receive the system information from the network apparatus based on the obtaining manner and a predefined time interval, or obtain the system information by sending the first signal. Alternatively, if the synchronization signal further carries the obtaining manner and the time information, the terminal apparatus may determine a time interval based on the time information, and directly receive the system information from the network apparatus based on the time interval and the obtaining manner, or obtain the system information by sending the first signal.

In conclusion, the cell barred indicator is carried on the synchronization signal, so that the terminal apparatus can obtain the cell barred indicator after detecting the synchronization signal. In other words, in this case, the receiving end does not need to receive a PBCH again or demodulate the PBCH to obtain the cell barred indicator. In this way, energy consumption of the terminal apparatus can be reduced.

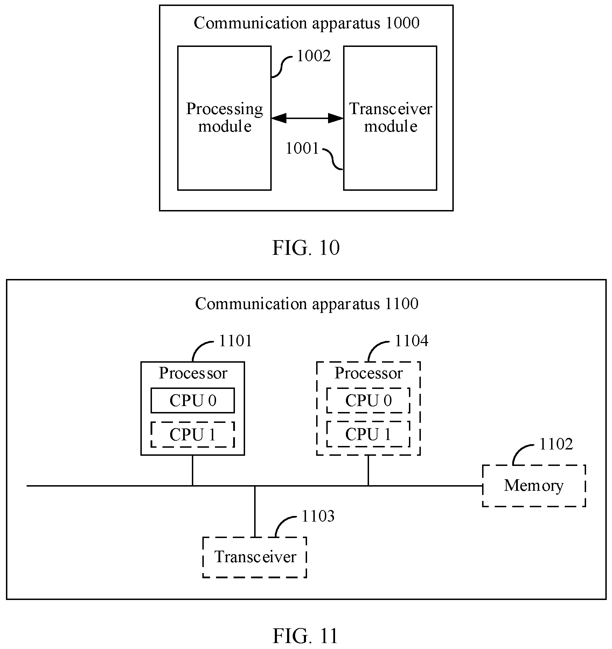

The foregoing describes in detail the communication methods provided in embodiments of this application with reference to FIG. 6 to FIG. 8. The following describes in detail, with reference to FIG. 10 and FIG. 11, a communication apparatus configured to perform the communication method provided in embodiments of this application.

FIG. 10 is a diagram 1 of a structure of a communication apparatus according to an embodiment of this application. For example, as shown in FIG. 10, the communication apparatus 1000 includes a transceiver module 1001 and a processing module 1002. For ease of description, FIG. 10 shows only main components of the communication apparatus.

In some embodiments, the communication apparatus 1000 may be used in the communication system shown in FIG. 4, and perform a function of the terminal apparatus in the communication method shown in FIG. 6.

The transceiver module 1001 is configured to receive a synchronization signal from a network apparatus, where the synchronization signal carries an obtaining manner of system information; and the processing module 1002 is configured to obtain the system information based on the obtaining manner.

In a possible design solution, the obtaining manner is any one of the following: directly receiving the system information from the network apparatus, or obtaining the system information by sending a first signal.

In a possible design solution, the synchronization signal includes a PSS and an SSS, and the obtaining manner is carried on the PSS, or the obtaining manner is carried on the SSS.

Optionally, the synchronization signal further carries at least one of the following: a cell identity of a cell of the network apparatus, a cell barred indicator, and time information. The cell barred indicator indicates whether a terminal is allowed to camp on the cell of the network apparatus. The time information indicates time for directly receiving the system information or time for sending the first signal.

Further, the cell identity is carried on the SSS.

Further, the cell barred indicator and/or the time information is carried on the PSS.

Further, the cell barred indicator and/or the time information is carried on the SSS.

Further, when the cell barred indicator is carried on the PSS, the time information is carried on the SSS; or when the time information is carried on the PSS, the cell barred indicator is carried on the SSS.

Further, the SSS includes a first sequence and a second sequence, the first sequence is used to carry the cell identity, and the second sequence is used to carry at least one of the cell barred indicator, the time information, and the obtaining manner.

Further, the second sequence is used to scramble the first sequence.

Further, the second sequence is a Hadamard sequence.

Optionally, information carried on the PSS indicates that the synchronization signal includes the SSS.

In a possible design solution, the system information includes at least one of the following: a system frame number of the cell of the network apparatus, a subcarrier spacing indication, an intra-frequency cell reselection indicator, a frequency domain offset between the synchronization signal and a common resource, cell selection information, cell access-related information, serving cell configuration information, scheduling information of other system information, a connection setup failure control configuration, and a terminal timer configuration.

Optionally, the transceiver module 1001 may include a sending module (not shown in FIG. 10) and a receiving module (not shown in FIG. 10). The sending module is configured to implement a sending function of the communication apparatus 1000, and the receiving module is configured to implement a receiving function of the communication apparatus 1000.

Optionally, the communication apparatus 1000 may further include a storage module (not shown in FIG. 10), and the storage module stores a program or instructions. When the processing module 1002 executes the program or the instructions, the communication apparatus 1000 is enabled to perform the functions of remote UE or a remote device in the method shown in FIG. 6 in the foregoing methods.

It may be understood that the communication apparatus 1000 may be a terminal, for example, remote UE or a remote device, may be a chip (system) or another part or component that may be disposed in the terminal, or may be an apparatus including the terminal. This is not limited in this application.

In addition, for technical effects of the communication apparatus 1000, refer to the technical effects of the communication methods shown in FIG. 6 to FIG. 8. Details are not described herein again.

In some embodiments, the communication apparatus 1000 may be used in the communication system shown in FIG. 4, and perform a function of the network apparatus in the method shown in FIG. 6.

The processing module 1002 is configured to control the transceiver module 1001 to send a synchronization signal carrying an obtaining manner of system information, and send the system information.

In a possible design solution, the obtaining manner is any one of the following: directly receiving the system information from a network apparatus, or obtaining the system information by sending a first signal.

In a possible design solution, the synchronization signal includes a primary synchronization signal PSS and a secondary synchronization signal SSS, and the obtaining manner is carried on the PSS, or the obtaining manner is carried on the SSS.

Optionally, the synchronization signal further carries at least one of the following: a cell identity of a cell of the network apparatus, a cell barred indicator, and time information. The cell barred indicator indicates whether a terminal is allowed to camp on the cell of the network apparatus. The time information indicates time for directly receiving the system information or time for sending the first signal.

Further, the cell identity is carried on the SSS.

Further, the cell barred indicator and/or the time information is carried on the PSS.

Further, the cell barred indicator and/or the time information is carried on the SSS.

Further, when the cell barred indicator is carried on the PSS, the time information is carried on the SSS; or when the time information is carried on the PSS, the cell barred indicator is carried on the SSS.

Further, the SSS includes a first sequence and a second sequence, the first sequence is used to carry the cell identity, and the second sequence is used to carry at least one of the cell barred indicator, the time information, and the obtaining manner.

Further, the second sequence is used to scramble the first sequence.

Further, the second sequence is a Hadamard sequence.

Optionally, information carried on the PSS indicates that the synchronization signal includes the SSS.

In a possible design solution, the system information includes at least one of the following: a system frame number of the cell of the network apparatus, a subcarrier spacing indication, an intra-frequency cell reselection indicator, a frequency domain offset between the synchronization signal and a common resource, cell selection information, cell access-related information, serving cell configuration information, scheduling information of other system information, a connection setup failure control configuration, and a terminal timer configuration.

In a possible design solution, when a quantity of served users is greater than or equal to a quantity threshold, the obtaining manner is directly receiving the system information from the network apparatus; or when the quantity of served users is less than the quantity threshold, the obtaining manner is obtaining the system information by sending the first signal.

Optionally, the transceiver module 1001 may include a sending module (not shown in FIG. 10) and a receiving module (not shown in FIG. 10). The sending module is configured to implement a sending function of the communication apparatus 1000, and the receiving module is configured to implement a receiving function of the communication apparatus 1000.

Optionally, the communication apparatus 1000 may further include a storage module (not shown in FIG. 10), and the storage module stores a program or instructions. When the processing module 1002 executes the program or the instructions, the communication apparatus 1000 is enabled to perform the functions of remote UE or a remote device in the method shown in FIG. 6 in the foregoing methods.

It may be understood that the communication apparatus 1000 may be a terminal, for example, remote UE or a remote device, may be a chip (system) or another part or component that may be disposed in the terminal, or may be an apparatus including the terminal. This is not limited in this application.

In addition, for technical effects of the communication apparatus 1000, refer to the technical effects of the communication methods shown in FIG. 6 to FIG. 8. Details are not described herein again.

It may be understood that in this embodiment of this application, the communication apparatus may alternatively be the O-CU, the O-DU, or an O-RU in the ORAN, or may be a combination of the O-CU, the O-DU, or the O-RU.

For example, in some embodiments, the O-RU may send a synchronization signal carrying an obtaining manner of system information. The O-CU generates the system information, and the O-DU and the O-RU send the system information.

FIG. 11 is a diagram 2 of a structure of a communication apparatus according to an embodiment of this application. For example, the communication apparatus may be a terminal, or may be a chip (system) or another part or component that may be disposed in the terminal. As shown in FIG. 11, the communication apparatus 1100 may include a processor 1101. Optionally, the communication apparatus 1100 may further include a memory 1102 and/or a transceiver 1103. The processor 1101 is coupled to the memory 1102 and the transceiver 1103, for example, may be connected to the memory 1102 and the transceiver 1103 through a communication bus.

The following describes components of the communication apparatus 1100 in detail with reference to FIG. 11.

The processor 1101 is a control center of the communication apparatus 1100, and may be one processor, or may be a general term of a plurality of processing elements. For example, the processor 1101 is one or more central processing units (central processing unit, CPU), may be an application-specific integrated circuit (application-specific integrated circuit, ASIC), or is configured as one or more integrated circuits implementing embodiments of this application, for example, one or more microprocessors (digital signal processor, DSP) or one or more field programmable gate arrays (field programmable gate array, FPGA).

Optionally, the processor 1101 may perform various functions of the communication apparatus 1100 by running or executing a software program stored in the memory 1102 and invoking data stored in the memory 1102, for example, perform the communication method shown in FIG. 6.

During specific implementation, in an embodiment, the processor 1101 may include one or more CPUs, for example, a CPU 0 and a CPU 1 shown in FIG. 11.

During specific implementation, in an embodiment, the communication apparatus 1100 may alternatively include a plurality of processors, for example, the processor 1101 and a processor 1104 shown in FIG. 11. Each of the processors may be a single-core processor (single-CPU), or may be a multi-core processor (multi-CPU). The processor herein may be one or more devices, circuits, and/or processing cores configured to process data (for example, computer program instructions).

The memory 1102 is configured to store a software program for performing the solutions in this application, and the processor 1101 controls execution of the software program. For a specific implementation, refer to the foregoing method embodiments. Details are not described herein again.

Optionally, the memory 1102 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instruction or data structure and that can be accessed by a computer. However, this is not limited thereto. The memory 1102 may be integrated with the processor 1101, or may exist independently, and is coupled to the processor 1101 through an interface circuit (not shown in FIG. 11) of the communication apparatus 1100. This is not specifically limited in this embodiment of this application.

The transceiver 1103 is configured to communicate with another communication apparatus. For example, the communication apparatus 1100 is a terminal, and the transceiver 1103 may be configured to communicate with a network apparatus or communicate with another terminal device. For another example, the communication apparatus 1100 is a network apparatus, and the transceiver 1103 may be configured to communicate with a terminal or communicate with another network apparatus.

Optionally, the transceiver 1103 may include a receiver and a transmitter (not separately shown in FIG. 11). The receiver is configured to implement a receiving function, and the transmitter is configured to implement a sending function.

Optionally, the transceiver 1103 may be integrated with the processor 1101, or may exist independently, and is coupled to the processor 1101 through an interface circuit (not shown in FIG. 11) of the communication apparatus 1100. This is not specifically limited in this embodiment of this application.

It may be understood that a structure of the communication apparatus 1100 shown in FIG. 11 does not constitute a limitation on the communication apparatus. An actual communication apparatus may include more or fewer parts than those shown in the figure, or combine some parts, or have different part arrangement.

In addition, for technical effects of the communication apparatus 1100, refer to the technical effects of the method in the foregoing method embodiments. Details are not described herein again.

It should be understood that, the processor in embodiments of this application may be a central processing unit (central processing unit, CPU), or the processor may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between associated objects, or may represent an "and/or" relationship. A specific meaning depends on the context.

In this application, at least one means one or more, and a plurality of means two or more. "At least one of the following items (pieces)" or a similar expression thereof means any combination of these items, including a single item (piece) or any combination of a plurality of items (pieces). For example, at least one of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, or a network apparatus) to perform all or a part of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, wherein the method comprises:

   receiving a synchronization signal from a network apparatus, wherein the synchronization signal carries an obtaining manner of system information; and
   obtaining the system information based on the obtaining manner.

2. The method according to claim 1, wherein the obtaining manner is any one of the following: directly receiving the system information from the network apparatus, or obtaining the system information by sending a first signal.

3. The method according to claim 1 or 2, wherein the synchronization signal comprises a primary synchronization signal PSS and a secondary synchronization signal SSS, and the obtaining manner is carried on the PSS, or the obtaining manner is carried on the SSS.

4. The method according to claim 3, wherein the synchronization signal further carries at least one of the following: a cell identity of a cell of the network apparatus, a cell barred indicator, and time information, the cell barred indicator indicates whether a terminal is allowed to camp on the cell of the network apparatus, and the time information indicates time for directly receiving the system information or time for sending the first signal.

5. The method according to claim 4, wherein the cell identity is carried on the SSS.

6. The method according to claim 4 or 5, wherein the cell barred indicator and/or the time information is carried on the PSS.

7. The method according to claim 4 or 5, wherein the cell barred indicator and/or the time information is carried on the SSS.

8. The method according to claim 6 or 7, wherein when the cell barred indicator is carried on the PSS, the time information is carried on the SSS; or when the time information is carried on the PSS, the cell barred indicator is carried on the SSS.

9. The method according to any one of claims 5 to 8, wherein the SSS comprises a first sequence and a second sequence, the first sequence is used to carry the cell identity, and the second sequence is used to carry at least one of the cell barred indicator, the time information, and the obtaining manner.

10. The method according to claim 9, wherein the second sequence is used to scramble the first sequence.

11. The method according to any one of claims 3 to 10, wherein information carried on the PSS indicates that the synchronization signal comprises the SSS.

12. A communication method, wherein the method comprises:

    sending a synchronization signal carrying an obtaining manner of system information; and
    sending the system information.

13. The method according to claim 12, wherein the obtaining manner is any one of the following: directly receiving the system information from a network apparatus, or obtaining the system information by sending a first signal.

14. The method according to claim 12 or 13, wherein the synchronization signal comprises a primary synchronization signal PSS and a secondary synchronization signal SSS, and the obtaining manner is carried on the PSS, or the obtaining manner is carried on the SSS.

15. The method according to claim 14, wherein the synchronization signal further carries at least one of the following: a cell identity of a cell of the network apparatus, a cell barred indicator, and time information, the cell barred indicator indicates whether a terminal is allowed to camp on the cell of the network apparatus, and the time information indicates time for directly receiving the system information or time for sending the first signal.

16. The method according to claim 15, wherein the cell identity is carried on the SSS.

17. The method according to claim 15 or 16, wherein the cell barred indicator and/or the time information is carried on the PSS.

18. The method according to claim 15 or 16, wherein the cell barred indicator and/or the time information is carried on the SSS.

19. The method according to claim 17 or 18, wherein when the cell barred indicator is carried on the PSS, the time information is carried on the SSS; or when the time information is carried on the PSS, the cell barred indicator is carried on the SSS.

20. The method according to any one of claims 16 to 19, wherein the SSS comprises a first sequence and a second sequence, the first sequence is used to carry the cell identity, and the second sequence is used to carry at least one of the cell barred indicator, the time information, and the obtaining manner.

21. The method according to claim 20, wherein the second sequence is used to scramble the first sequence.

22. The method according to any one of claims 14 to 21, wherein information carried on the PSS indicates that the synchronization signal comprises the SSS.

23. A communication apparatus, wherein the apparatus comprises:

a transceiver module, configured to receive a synchronization signal from a network apparatus, wherein the synchronization signal carries an obtaining manner of system information; and
a processing module, configured to obtain the system information based on the obtaining manner.

24. The apparatus according to claim 23, wherein the obtaining manner is any one of the following: directly receiving the system information from the network apparatus, or obtaining the system information by sending a first signal.

25. The apparatus according to claim 23 or 24, wherein the synchronization signal comprises a primary synchronization signal PSS and a secondary synchronization signal SSS, and the obtaining manner is carried on the PSS, or the obtaining manner is carried on the SSS.

26. The apparatus according to claim 25, wherein the synchronization signal further carries at least one of the following: a cell identity of a cell of the network apparatus, a cell barred indicator, and time information, the cell barred indicator indicates whether a terminal is allowed to camp on the cell of the network apparatus, and the time information indicates time for directly receiving the system information or time for sending the first signal.

27. The apparatus according to claim 26, wherein the cell identity is carried on the SSS.

28. The apparatus according to claim 26 or 27, wherein the cell barred indicator and/or the time information is carried on the PSS.

29. The apparatus according to claim 26 or 27, wherein the cell barred indicator and/or the time information is carried on the SSS.

30. The apparatus according to claim 28 or 29, wherein when the cell barred indicator is carried on the PSS, the time information is carried on the SSS; or when the time information is carried on the PSS, the cell barred indicator is carried on the SSS.

31. The apparatus according to any one of claims 27 to 30, wherein the SSS comprises a first sequence and a second sequence, the first sequence is used to carry the cell identity, and the second sequence is used to carry at least one of the cell barred indicator, the time information, and the obtaining manner.

32. The apparatus according to claim 31, wherein the second sequence is used to scramble the first sequence.

33. The apparatus according to any one of claims 25 to 32, wherein information carried on the PSS indicates that the synchronization signal comprises the SSS.

34. A communication apparatus, wherein the apparatus comprises:
a processing module, configured to control a transceiver module to send a synchronization signal carrying an obtaining manner of system information, and send the system information.

35. The apparatus according to claim 34, wherein the obtaining manner is any one of the following: directly receiving the system information from a network apparatus, or obtaining the system information by sending a first signal.

36. The apparatus according to claim 34 or 35, wherein the synchronization signal comprises a primary synchronization signal PSS and a secondary synchronization signal SSS, and the obtaining manner is carried on the PSS, or the obtaining manner is carried on the SSS.

37. The apparatus according to claim 36, wherein the synchronization signal further carries at least one of the following: a cell identity of a cell of the network apparatus, a cell barred indicator, and time information, the cell barred indicator indicates whether a terminal is allowed to camp on the cell of the network apparatus, and the time information indicates time for directly receiving the system information or time for sending the first signal.

38. The apparatus according to claim 37, wherein the cell identity is carried on the SSS.

39. The apparatus according to claim 37 or 38, wherein the cell barred indicator and/or the time information is carried on the PSS.

40. The apparatus according to claim 37 or 38, wherein the cell barred indicator and/or the time information is carried on the SSS.

41. The apparatus according to claim 39 or 40, wherein when the cell barred indicator is carried on the PSS, the time information is carried on the SSS; or when the time information is carried on the PSS, the cell barred indicator is carried on the SSS.

42. The apparatus according to any one of claims 38 to 41, wherein the SSS comprises a first sequence and a second sequence, the first sequence is used to carry the cell identity, and the second sequence is used to carry at least one of the cell barred indicator, the time information, and the obtaining manner.

43. The apparatus according to claim 42, wherein the second sequence is used to scramble the first sequence.

44. The apparatus according to any one of claims 36 to 43, wherein information carried on the PSS indicates that the synchronization signal comprises the SSS.

45. A communication apparatus, wherein the communication apparatus comprises a processor and a memory, the memory is configured to store computer instructions, and when the processor executes the instructions, the communication apparatus is enabled to perform the method according to any one of claims 1 to 11, or perform the method according to any one of claims 12 to 22.

46. A communication chip, wherein the communication chip stores instructions, and when the chip is run on a communication device, the method according to any one of claims 1 to 11 or the method according to any one of claims 12 to 22 is implemented.

47. A communication system, wherein the communication system comprises an apparatus configured to perform the method according to any one of claims 1 to 11, and/or an apparatus configured to perform the method according to any one of claims 12 to 22.

48. A computer-readable storage medium, wherein the computer-readable storage medium comprises a computer program or instructions; and when the computer program or the instructions are run on a computer, the computer is enabled to perform the method according to any one of claims 1 to 11, or perform the method according to any one of claims 12 to 22.

49. A computer program product, wherein the computer program product comprises a computer program or instructions, and when the computer program or the instructions are run by a communication apparatus, the method according to any one of claims 1 to 11 or the method according to any one of claims 12 to 22 is performed.

FIG. 1

Frequency

Frequency

Frequency

| SSB | CORESET | PDSCH |

| CORESET | PDSCH |
| SSB |

| CORESET | PDSCH |
| SSB |

Time

Time

Time

Multiplexing mode 1

Multiplexing mode 2

Multiplexing mode 3

FIG. 2

Slot n    Slot n+1          Slot m    Slot m+1    Slot m+2    Slot m+3

| SSB SSB | SSB SSB |    | SIB1 | SIB1 | SIB1 | SIB1 |

FIG. 3

| Terminal apparatus | Network apparatus |

FIG. 4

FIG. 5

```
┌──────────────┐                              ┌──────────────┐
│   Network    │                              │   Terminal   │
│  apparatus   │                              │  apparatus   │
└──────────────┘                              └──────────────┘
       │                                             │
       │  S601: Synchronization signal (an           │
       │  obtaining manner of system information)    │
       │────────────────────────────────────────────▶│
       │                                             │
       │                         ┌───────────────────────────┐
       │                         │  S602: Obtain the system  │
       │                         │  information based on the │
       │                         │      obtaining manner     │
       │                         └───────────────────────────┘
       │                                             │
       │        S603: System information             │
       │────────────────────────────────────────────▶│
       │                                             │
```

FIG. 6

FIG. 7

FIG. 8

FIG. 9

Communication apparatus 1000

Processing module ←1002→ Transceiver module

1001

FIG. 10

Communication apparatus 1100

1101

Processor

CPU 0

CPU 1

1104

Processor

CPU 0

CPU 1

1102

Memory

1103

Transceiver

FIG. 11

## INTERNATIONAL SEARCH REPORT

| International application No. |
|---|
| **PCT/CN2023/111822** |

### A. CLASSIFICATION OF SUBJECT MATTER

H04W48/10(2009.01)i

According to International Patent Classification (IPC) or to both national classification and IPC

### B. FIELDS SEARCHED

Minimum documentation searched (classification system followed by classification symbols)

IPC: H04W H04B

Documentation searched other than minimum documentation to the extent that such documents are included in the fields searched

Electronic data base consulted during the international search (name of data base and, where practicable, search terms used)

CNTXT, ENTXTC, DWPI, WPABS: 同步信号, 同步消息, 系统消息, 系统信息, 获取, 确定, 方式, 请求, SSB, PSS, SSS, SIB, SI, on-demand, request

### C. DOCUMENTS CONSIDERED TO BE RELEVANT

| Category* | Citation of document, with indication, where appropriate, of the relevant passages | Relevant to claim No. |
|---|---|---|
| X | CN 112261700 A (QUALCOMM INC.) 22 January 2021 (2021-01-22) description, paragraphs 0153-0167 and 0221-0241, and claim 1 | 1-49 |
| A | CN 110730514 A (CHINA MOBILE COMMUNICATION CO., LTD., RESEARCH INSTITUTE et al.) 24 January 2020 (2020-01-24) entire document | 1-49 |
| A | US 2018302843 A1 (TELEFONAKTIEBOLAGET LM ERICSSON (PUBL)) 18 October 2018 (2018-10-18) entire document | 1-49 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 April 2024** | **24 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/111822**

| Patent document cited in search report | | | Publication date (day/month/year) | Patent family member(s) | | | Publication date (day/month/year) |
|---|---|---|---|---|---|---|---|
| CN | 112261700 | A | 22 January 2021 | JP | 2020202582 | A | 17 December 2020 |
| | | | | KR | 20230113846 | A | 01 August 2023 |
| | | | | EA | 201791557 | A1 | 31 May 2018 |
| | | | | US | 2019124568 | A1 | 25 April 2019 |
| | | | | US | 2020169927 | A1 | 28 May 2020 |
| | | | | US | 2021045025 | A1 | 11 February 2021 |
| | | | | JP | 2018511961 | A | 26 April 2018 |
| | | | | KR | 20170117052 | A | 20 October 2017 |
| | | | | AU | 2016218353 | A1 | 27 July 2017 |
| | | | | TW | 202015452 | A | 16 April 2020 |
| | | | | TW | 202231095 | A | 01 August 2022 |
| | | | | JP | 2022191417 | A | 27 December 2022 |
| | | | | KR | 20220126807 | A | 16 September 2022 |
| | | | | JP | 2024012443 | A | 30 January 2024 |
| | | | | BR | 112017017116 | A2 | 03 April 2018 |
| | | | | EP | 4149167 | A1 | 15 March 2023 |
| | | | | TN | 2017000323 | A1 | 16 January 2019 |
| | | | | WO | 2016130353 | A2 | 18 August 2016 |
| | | | | TW | 201640934 | A | 16 November 2016 |
| | | | | EP | 3257297 | A2 | 20 December 2017 |
| | | | | US | 2016234736 | A1 | 11 August 2016 |
| | | | | CN | 107251612 | A | 13 October 2017 |
| CN | 110730514 | A | 24 January 2020 | None | | | |
| US | 2018302843 | A1 | 18 October 2018 | WO | 2018182472 | A1 | 04 October 2018 |
| | | | | EP | 3400735 | A1 | 14 November 2018 |
| | | | | CN | 110463274 | A | 15 November 2019 |

Form PCT/ISA/210 (patent family annex) (July 2022)